# EUROPÄISCHE PATENTSCHRIFT

(11) **EP 2 630 549 B1**
(45) Veröffentlichungstag und Bekanntmachung des Hinweises auf die Patenterteilung: **17.06.2020**
(21) Anmeldenummer: 11771200.0
(22) Anmeldetag: 21.10.2011
(51) Int. Cl.: G05D 1/02

(54) **AUTONOMES TRANSPORTSYSTEM**
AUTONOMOUS TRANSPORTATION SYSTEM
SYSTÈME DE TRANSPORT AUTONOME

(30) Priorität: 22.10.2010 DE 102010042825
(43) Veröffentlichungstag der Anmeldung: 28.08.2013
(73) Patentinhaber: KUKA Deutschland GmbH, 86165 Augsburg (DE); Grenzebach Maschinenbau GmbH, 86663 Asbach-Bäumenheim/Hamlar (DE)
(72) Erfinder: KURTH, Johannes, 86163 Augsburg (DE); PFAFF, Patrik, 86165 Augsburg (DE); BRUDNIOK, Sven, D-86853 Langerringen (DE); MAISCHBERGER, Johann, 86424 Dinkelscherben (DE); LINNHOFF, Winhold, 14476 Potsdam (DE); HAFENBERG, Sven, 14469 Potsdam (DE)
(74) Vertreter: Böss, Dieter Alexander
(86) Internationale Anmeldenummer: PCT/EP2011/068469
(87) Internationale Veröffentlichungsnummer: WO 2012/052554

(56) Entgegenhaltungen:
- EP-A1- 0 219 664
- EP-A1- 0 913 751
- WO-A1-02/45915
- WO-A2-2007/047514
- DE-T5- 10 196 988
- J.L. MARTÍNEZ ET AL: "PATH TRACKING FOR MOBILE ROBOTS WITH A TRAILER", IFAC THE 2012 IFAC WORKSHOP ON AUTOMATIC CONTROL IN OFFSHORE OIL AND GAS PRODUCTION, vol. 35, no. 1, 1 January 2002 (2002-01-01), pages 329-334, XP055599966, Red Hook, NY ISSN: 1474-6670, DOI: 10.3182/20020721-6-ES-1901.00867 ISBN: 978-1-123-47890-7
- MARTINEZ J L ET AL: "Object following and obstacle avoidance using a laser scanner in the outdoor mobile robot Auriga-/spl alpha/", INTELLIGENT ROBOTS AND SYSTEMS, 1998. PROCEEDINGS., 1998 IEEE/RSJ INTE RNATIONALCONFERENCE ON, IEEE, vol. 1, 13 October 1998 (1998-10-13), pages 204-209, XP010311368, DOI: 10.1109/IROS.1998.724620 ISBN: 978-0-7803-4465-5
- SOTIRIOS CH DIAMANTAS ET AL: "Localisation and Mapping Using a Laser Range Finder: A Goal-Seeking Approach", AUTONOMIC AND AUTONOMOUS SYSTEMS, 2009. ICAS '09. FIFTH INTERNATIONAL CONFERENCE ON, IEEE, PISCATAWAY, NJ, USA, 20 April 2009 (2009-04-20), pages 270-276, XP031461238, ISBN: 978-1-4244-3684-2
- Raymond Sheh ET AL: "A Low-Cost, Compact, Lightweight 3D Range Sensor", , 1 June 2006 (2006-06-01), XP055283503, Retrieved from the Internet: URL:http://www.araa.asn.au/acra/acra2006/p apers/paper_5_59.pdf [retrieved on 2016-06-24]
- Raymond Sheh ET AL: "Semi-Autonomous Robots for RoboCupRescue", , 4 December 2009 (2009-12-04), XP055599969, Retrieved from the Internet: URL:http://www.araa.asn.au/acra/acra2009/p apers/pap151s1.pdf [retrieved on 2019-06-26]

## Beschreibung

Die Erfindung betrifft ein autonomes Transportsystem aufweisend ein autonomes Fahrzeug und einen Anhänger.

Die WO 2007/047514 A2 beschreibt ein System, ein Verfahren und eine Vorrichtung zum automatischen Verfolgen oder Liefern von Gütern von einem Ort zu einem anderen Ort. Dabei wird eine Robotervorrichtung verwendet, die ein Schleppfahrzeug und einen angehängten Wagen aufweist. In einem Rechner des Schleppfahrzeugs oder des Wagens sind ein Grundrissplan eines Gebäudes und Fahrwege gespeichert, auf welchen das System von einem Ort zu dem anderen Ort gelangen kann. Während einer Auslieferfahrt nehmen verschiedene Sensoren und Scanner Daten auf, um dem beabsichtigten Fahrweg genauer folgen zu können. Das System umfasst vorzugsweise drahtlose Netzwerke, die einem oder mehreren Schleppfahrzeugen es erlauben mit einer Basisstation zu kommunizieren.

Die DE 101 96 988 T5 beschreibt ein mobiles Robotersystem zur Ausführung einer Vielzahl von separaten Tätigkeiten, das wenigstens einen autonomen mobilen Roboter mit Rädern, der wenigstens einen Radtriebsmotor aufweist; einen eingebauten Computer, Mittel zur Navigation, Ausrichtung und Manövrierung in einer Umgebung mit beweglichen Hindernissen, ein Sensorsystem; und ein drahtloses Kommunikationssystem zum Empfangen und Senden von Signalen enthält, wobei das System ebenfalls eine Vielzahl von andockbaren Betriebsmodulen enthält, die mit dem autonomen mobilen Roboter selektiv kuppelbar sind, um eine Betriebseinheit zu bilden.

Die EP 0 913 751 A1 beschreibt ein autonomes Fahrzeug, umfassend eine Eingabeeinheit für einen oder mehrere Fahraufträge, eine Einrichtung zur Routenplanung, umfassend mindestens eine Positionserkennungseinrichtung und eine digitale Straßenkarte, eine Einrichtung zur Generierung eines Weges, eine Anordnung von Sensoren, umfassend jeweils mindestens einen Abstandssensor zur Erfassung von Objekten und Beschaffenheitsmerkmalen des Weges, eine Kollisionsvermeidungseinrichtung, eine Einrichtung zur Zustandsdatenerkennung des Fahrzeuges, eine Fahrzeugkontolleinrichtung und eine Einrichtung zur Steuerung der Fahrzeugaktorik in Abhängigkeit von der Fahrzeugkontolleinrichtung erzeugter Signale.

Die Veröffentlichungen J.L. MARTINEZ et al.: "PATH TRACKING FOR MOBILE ROBOTS WITH A TRAILER", sowie Raymond Sheh et al.: "A Low-Cost, Compact, Lightweight 3D Range Sensor" und Raymond Sheh et al.: "Semi-Autonomous Robots for RoboCupRescue" offenbaren verschiedene robotische, autonome Transportsysteme und deren Komponenten.

Aufgabe der Erfindung ist es, ein autonomes Transportsystem aufweisend ein autonomes Fahrzeug und einen Anhänger zu schaffen, das auf kostengünstige Weise sicher betrieben werden kann.

Die Aufgabe der Erfindung wird gelöst durch ein autonomes Transportsystem nach Anspruch 1. Vorteilhafte Weiterbildungen sind in den abhängigen Ansprüchen beansprucht.

Der berührungslos detektierende Abstandssensor dient dazu Hindernisse und/oder Personen im Umfeld des autonomen Fahrzeugs, des Anhängers und/oder des autonomen Transportsystems wahrzunehmen. Der berührungslos detektierende Abstandssensor kann an dem Fahrwerk, dem Fahrzeugkörper und/oder dem Gehäuse des autonomen Fahrzeugs angeordnet, insbesondere daran befestigt sein.

Der berührungslos detektierende Abstandssensor kann ausgebildet sein, beispielsweise einen diskreten Einzelstrahl in eine Senderichtung auszusenden und die Senderichtung über einen zeitlichen Verlauf hinweg zu ändern. So kann beispielsweise ein sektorförmiger Bereich der Umgebung abgescannt werden. Der berührungslos detektierende Abstandssensor kann beispielsweise als Laserscanner ausgebildet sein. Alternativ oder ergänzend kann der berührungslos detektierende Abstandssensor ausgebildet sein, elektromagnetische, akustische und/oder optische Wellen gleichmäßig oder in Keulenform auszusenden. Ein derartiger berührungslos detektierender Abstandssensor kann beispielsweise als Ultraschallsensor ausgebildet sein. Jede Art dieser berührungslos detektierenden Abstandssensoren kann nicht nur zum Senden von Signalen, sondern in gleicher Weise auch zum Empfangen von Signalen, insbesondere zum Empfangen von reflektierten ausgesendeten Signalen ausgebildet bzw. eingerichtet sein.

Die maximale Erhebung des Fahrzeugkörpers kann beispielsweise durch den höchsten Punkt auf einer Außenschale des Gehäuses des autonomen Fahrzeugs gebildet werden. Alternativ kann die maximale Erhebung des Fahrzeugkörpers beispielsweise auch durch den höchsten Punkt einer Konstruktion des Fahrwerks gebildet werden.

In einer besonderen Weiterbildung der Erfindung ist der berührungslos detektierende Abstandssensor derart ausgebildet und/oder derart am Fahrzeugkörper angeordnet, dass er nicht über die maximale Erhebung des Fahrzeugkörpers nach oben hinausragt. So wird eine sehr kompakte, insbesondere flache Bauweise des autonomen Fahrzeugs erreicht. Aufgrund der sehr kompakten, insbesondere flachen Bauweise kann das autonome Fahrzeug unter Anhängern, insbesondere vollständig einfahren.

Indem die Senderichtung des berührungslos detektierenden Abstandssensors eine Richtungskomponente aufweisen kann, die in einer Draufsicht auf das autonome Fahrzeug den Grundriss des Fahrzeugkörpers schneidet, kann auch ein seitlich und/oder hinter dem autonomen Fahrzeug bzw. dem Anhänger liegendes Umfeld auf Hindernisse und/oder Personen bzw. Kollision überwacht werden.

Das autonome Fahrzeug kann eine runde Grundform aufweisen und über einen Scanner verfügen. Der Scanner stellt eine Ausprägung eines berührungslos detektierenden Abstandssensors dar. Der berührungslos detektierende Abstandssensor kann beispielsweise ein Laserscanner oder ein Ultraschallsensor sein. Das autonome Fahrzeug kann somit angetriebenen und nichtangetriebenen Rädern ausgeführt sein, um geradeaus, rückwärts und um die Kurve fahren zu können. Das autonome Fahrzeug kann derart ausgebildet sein, dass es sich auf der Stelle um einen zentralen Drehpunkt drehen kann. Im zentralen Drehpunkt kann eine Kupplung angeordnet sein, an die ein Anhänger angekoppelt werden kann. In einer Ausprägung eines erfindungsgemäßen autonomen Fahrzeugs kann das Fahrwerk über zwei zentral angebrachte, differentiell angetriebene Räder angetrieben werden. Das Fahrwerk kann außerdem über Stützräder verfügen.

Die Erfindung stellt ein autonomes Transportsystem bereit, bei dem das angetriebene autonome Fahrzeug von einem Last tragenden Anhänger getrennt ausgebildet ist und bei Bedarf angekoppelt bzw. abgekoppelt werden kann. Insbesondere das autonome Fahrzeug kann einen optischen Scanner aufweisen, um bei freier Navigation sicher betrieben werden zu können. Der optische Scanner bzw. der wenigstens eine berührungslos detektierende Abstandssensor ist dabei eingerichtet, das Umfeld des autonomen Fahrzeugs und/oder des Anhängers auf Hindernisse und/oder Personen zu überwachen. Werden Hindernisse und/oder Personen im Umfeld des autonomen Fahrzeugs und/oder des Anhängers vom berührungslos detektierenden Abstandssensor detektiert, kann eine Steuerungsvorrichtung die Fahrbewegungen des autonomen Fahrzeugs bzw. des gesamten autonomen Transportsystems abändern bzw. den Hindernissen und/oder Personen ausweichen bzw. vor diesen anhalten.

Der berührungslos detektierende Abstandssensor kann an einer in Fahrtrichtung des autonomen Fahrzeugs vorderen Seite des Fahrzeugkörpers angeordnet sein und die Senderichtung eine entgegen der Fahrtrichtung weisende Richtungskomponente aufweisen. Der Sektor, welcher durch den berührungslos detektierenden Abstandssensor eingesehen bzw. überwacht werden kann erfasst dabei nicht nur den vorderen Bereich in Fahrtrichtung, d.h. nicht nur 180 Grad des nach vorne weisenden Raumes, sondern auch einen über die 180 Grad hinausgehenden Sektorbereich, der zumindest teilweise nach hinten gerichtet ist.

Am autonomen Fahrzeug kann beispielsweise ein Laserscanner angebracht sein. Mit dem Scanner ist es bei angekoppeltem Last tragendem Anhänger, insbesondere bei einer Geradeausfahrt möglich, den gesamten Bereich vor dem autonomen Fahrzeug, d.h. in Fahrtrichtung und einen Winkelbereich von 45° in beiden Richtungen nach hinten zu überwachen.

Der detektierende Abstandssensor kann eingerichtet sein, Signale in Senderichtungen auszusenden, die in einem Sektor liegen, der sich ausgehend von der Fahrtrichtung des autonomen Fahrzeugs über einen Winkelbereich von minus 135 Grad bis plus 135 Grad erstreckt.

Durch den Winkelbereich von minus 135 Grad bis plus 135 Grad kann nicht nur der nach vorne weisende Sektorbereich von 180 Grad überwacht bzw. eingesehen werden, sondern es kann sowohl linksseitig, als auch rechtsseitig des autonomen Fahrzeugs bzw. des Anhängers jeweils ein zusätzlicher Sektorbereich von 45 Grad überwacht bzw. eingesehen werden. Statt eines zusätzlichen Sektorbereichs von 45 Grad sowohl linksseitig, als auch rechtsseitig kann in einer Variante der Erfindung ein zusätzlicher Sektorbereich von beispielsweise nur 30 Grad oder von mehr als 45 Grad vorgesehen sein.

Das autonome Fahrzeug kann so aufgebaut sein, dass es auf seiner Oberfläche Aussparungen besitzt, damit beispielsweise ein Laserstrahl des berührungslos detektierenden Abstandssensors ungehindert seitlich nach hinten dringen kann.

Eine Vorwärtsfahrt des autonomen Fahrzeugs kann generell definiert sein durch die Richtung, in welche der Scanner weist. Mit anderen Worten kann der Scanner, d.h. der berührungslos detektierende Abstandssensor an einer Vorderseite des autonomen Fahrzeugs angeordnet sein.

In allen erfindungsgemäßen Ausführungen kann der Fahrzeugkörper ein Gehäuse mit einer Grundform aufweisen, von der Abschnitte, die in der Senderichtung des berührungslos detektierenden Abstandssensors liegen, ausgespart sind. Das Gehäuse kann dazu beispielsweise stufenförmige und/oder nutenförmige Aussparungen aufweisen, welche es ermöglichen, dass die von dem berührungslos detektierenden Abstandssensor ausgesandten Signale durch die stufenförmige und/oder nutenförmige Aussparungen hindurch an dem Gehäuse und/oder dem Fahrzeugkörper des autonomen Fahrzeug vorbei geleitet werden können. Statt einer Aussparung kann auch das Gehäuse oder der Fahrzeugkörper des autonomen Fahrzeugs eine entsprechend geformte Außenfläche aufweisen.

In allen erfindungsgemäßen Ausführungen kann das Fahrwerk ausgebildet sein, das autonome Fahrzeug im Stand um eine senkrechte Symmetrieachse der Kupplung zu drehen. Dadurch kann das autonome Fahrzeug unter dem angekuppelten Anhänger gedreht werden, ohne dass sich der Anhänger von der Stelle bewegt. Das Fahrwerk kann derart ausgebildet sein bzw. die Räder derart angeordnet sein, dass sich das autonome Fahrzeug um die senkrechte Symmetrieachse der Kupplung dreht.

Der Anhänger weist eine Gegenkupplung zum Ankuppeln an eine Kupplung des autonomen Fahrzeugs, einen Tragboden, vier antriebslose Räder, die jeweils an einer Radlagerung um eine Drehachse drehbar gelagert sind, und ein die Radlagerungen mit dem Tragboden verbindendes Anhängerfahrwerk, wobei das Anhängerfahrwerk ausgebildet ist, zwischen den Rädern und dem Tragboden einen optisch durchlässigen Spaltraum für Signale eines berührungslos detektierenden Abstandssensors eines autonomen Fahrzeugs zu bilden.

Der Tragboden kann durch eine einfache Platte, beispielsweise mit einer rechteckigen Kontur gebildet werden. Der Tragboden kann jedoch jede andere Gestalt aufweisen und insbesondere wannenartig ausgebildet sein und/oder Verbindungsmittel aufweisen, durch welche Aufbauten, wie beispielsweise Teileregale, Schubfächer, Kammern und/oder Hängeregistersysteme an dem Tragboden befestigt werden können.

Der Spaltraum kann durch einen Zwischenraum zwischen den Oberkanten der Räder und einer Unterseite des Anhängers gebildet werden. Sind die Räder außerhalb der Grundrisskontur des Anhängers angeordnet, kann der Spaltraum durch einen Zwischenraum zwischen einer Unterseite des Anhängers und einer Fahrbahn des Anhängers gebildet werden.

Das Anhängerfahrwerk kann mit einem Spaltraum ausgebildet sein, der optisch durchlässig ist für Signale, die von einem berührungslos detektierenden Abstandssensor eines an der Gegenkupplung angekuppelten autonomen Fahrzeugs mit Senderichtungen ausgesandt werden, die in einem Sektor liegen, der sich ausgehend von einer Fahrtrichtung des autonomen Fahrzeugs, über einen Winkelbereich von minus 135 Grad bis plus 135 Grad erstreckt.

In allen erfindungsgemäßen Ausführungen des Anhängers können die Drehachsen der Räder und/oder der Radlagerungen parallel zu einer rechtwinkelig zur Fahrtrichtung des Anhängerfahrwerks verlaufenden geraden Vorderkante und/oder geraden Hinterkante des Tragbodens, insbesondere eines eine rechteckige Umfangskontur aufweisenden Tragbodens, ausgerichtet sein und die Drehachsen direkt unter der Vorderkante und/oder Hinterkante angeordnet sind oder außerhalb einer Umfangskontur des Tragbodens angeordnet sein.

Der Anhänger kann derart ausgebildet sein, dass er nur auf der einen Seite über zwei frei drehbare, nicht lenkbare Räder verfügt und auf der anderen Seite über zwei starre Füße verfügt.

Der Anhänger kann in der Ausprägung aufgebaut werden, dass er nur auf der einen Seite über zwei freie, nicht lenkbare Räder verfügt und auf der anderen Seite über zwei Füße. Die Füße können auf der Unterseite konisch zusammenlaufen. Damit kann der Wagen in einer entsprechend aufgebauten Aufnahmeposition zentriert werden.
Der Anhänger kann in der Ausführung ausgebildet sein, dass die Räder, oder alternativ starre Füße des Anhängers, auf der Seite an der sich das autonome Fahrzeug andockt, wegklappen. Eine Wegklappbewegung kann durch das Einfahren der Kupplung bzw. des Stempels des autonomen Fahrzeugs in die Gegenkupplung bzw. das Gegenstück oder die Aufnahme des Anhängers ausgelöst werden.

Der Anhänger kann in einer Ausführung ausgebildet sein, dass er über berührend detektierende Sensoren, wie beispielsweise Tastsensoren verfügt, die eine Kollision des Anhängers auch an Stellen erkennen, die von dem Laserscanner nicht eingesehen werden können. Die Tastsensoren können um den Anhänger umlaufend angeordnet sein. Signale der Tastsensoren können in sicherer Technik erfasst und/oder ausgewertet werden.
Der Anhänger kann mit einer Bremse ausgestattet sein, die geöffnet wird, wenn das autonome Fahrzeug den Anhänger mit der Kupplung bzw. dem Stempel hochhebt. Die Betätigung der Bremse kann dabei auf unterschiedliche Weise aufgebaut werden. So kann die Betätigung der Bremse beispielsweise zwischen den Rädern des Anhängers und dem autonomen Fahrzeug angeordnet sein. Alternativ kann die Betätigung der Bremse zwischen Boden des Anhängers und dem autonomen Fahrzeug angeordnet sein.

Der Anhänger verfügt beispielsweise über vier frei drehbare Räder, die nicht lenkbar sind. Um eine Kurvenfahrt zu ermöglichen, werden vom autonomen Fahrzeug immer die Räder des Anhängers auf der Seite angehoben, auf welcher das autonome Fahrzeug mittels seiner Kupplung an die Gegenkupplung andockt.

Das autonome Transportsystem kann eine Messvorrichtung aufweisen, die eingerichtet ist, einen sich durch eine erste Orientierung des autonomen Fahrzeugs und eine zweite Orientierung des Anhängers einstellenden Lenkwinkel durch Messen der Lagen von Kupplung und Gegenkupplung zu bestimmen.
Das autonome Transportsystem kann so aufgebaut sein, dass über einen zusätzlichen Sensor der Lenkwinkel zwischen dem autonomen Fahrzeug und dem Anhänger bestimmt wird.

Mittels des wenigstens einen zusätzlichen Sensors, der einen Lenkwinkel zwischen dem autonomen Fahrzeug und dem Anhänger bestimmt, kann die Stellung bzw. die Position des Anhängers in Bezug zum autonomen Fahrzeug bestimmt, insbesondere gemessen werden. In einer Ausführung kann der Sensor im Bereich eines Aufnahmebolzens der Gegenkupplung des Anhängers angeordnet sein. Die Kenntnis der Stellung des Anhängers kann wichtig sein, um zu verhindern, dass bei einer Fahrbewegung des autonomen Fahrzeugs der Anhänger mit einem Hindernis kollidiert.
Die Gefahr besteht besonders dann, wenn die Odometrie des autonomen Fahrzeugs nicht sehr genau ist und/oder eine zu geringe Auflösung aufweist. In diesem Fall kann es zu unbekannten Stellungen zwischen autonomen Fahrzeug und dem Anhänger kommen. Durch den Einsatz des oben beschrieben Sensors kann diese Ungenauigkeit behoben werden.

In allen erfindungsgemäßen Ausführungen des autonomen Transportsystems kann das autonome Transportsystem eine Steuerungsvorrichtung aufweisen, die eingerichtet ist, einen sich durch eine erste Orientierung des autonomen Fahrzeugs und eine zweite Orientierung des Anhängers einstellenden Lenkwinkel durch Detektieren der Position einer Komponente des Anhängers, insbesondere des Tragbodens, des Anhängerfahrwerks, der Räder, der Radlagerungen und/oder von wenigstens einer an den Anhänger angebrachten Reflektormarke, bezüglich des autonomen Fahrzeugs mittels des berührungslos detektierenden Abstandssensors des autonomen Fahrzeugs oder mittels eines weiteren Sensors, insbesondere eines weiteren berührungslos detektierenden Abstandssensors zu bestimmen.

Der Anhänger kann zwei Aufnahmepositionen, d.h. Gegenkupplungen für die Aufnahme der Kupplung, bzw. des Stempels des autonomen Fahrzeugs aufweisen. Die eine Kupplung kann sich mittig zwischen den Rädern auf der einen Seite des Anhängers und die andere mittig zwischen den Rädern auf der anderen Seite des Anhängers befinden. Hierdurch wird es ermöglicht, dass das autonome Fahrzeug an beiden Seiten, d.h. an einer Vorderseite und einer Rückseite des Anhängers andocken kann und somit den Anhänger in beide Richtungen bewegen kann. Bei diesen Bewegungen, bei denen der Anhänger vom autonomen Fahrzeug gezogen wird, führt das autonome Fahrzeug immer eine Vorwärtsfahrt aus.

Das autonome Fahrzeug kann sich unter dem Anhänger von der einen vorderen Andockposition zur anderen hinteren Andockposition bewegen. Eine Bewegung des autonomen Fahrzeugs unter dem Anhänger ist ohne Kollisionsgefahr hinsichtlich Hindernisse oder Personen im Umfeld des autonomen Transportsystems möglich, da das autonome Fahrzeug dabei nicht über den Grundriss des Anhängers vorsteht. Hierbei kann sich das autonome Fahrzeug auch um sich selbst drehen und von der einen Seite des Anhängers zu anderen Seite des Anhängers umpositionieren. Zu beiden Seiten des Anhängers kann sich das autonome Fahrzeug zwischen den beiden Anhängerfahrwerkshälften bewegen. Das autonome Fahrzeug kann daher nicht mehr mit Gegenständen oder Personen kollidieren, die sich neben dem Anhänger befinden. Wenn sich das autonome Fahrzeug zu einem der Andockpositionen hin bewegt, kann es gegebenenfalls im letzten Stück der Bewegung, auf der jeweiligen Vorderseite des Anhängers, unter diesem hervorragen. Dieses letzte Stück der Bewegung zum Andocken kann über den Scanner des autonome Fahrzeugs abgesichert werden.

In allen erfindungsgemäßen Ausführungen des autonomen Transportsystems kann die Steuerungsvorrichtung eingerichtet sein, während eines die Umgebung mittels des berührungslos detektierenden Abstandssensors nach Hindernissen überwachenden Navigationsbetriebs, die Komponenten des Anhängers, insbesondere den Tragboden, das Anhängerfahrwerk, die Räder und/oder die Radlagerungen mittels des berührungslos detektierenden Abstandssensors zu erkennen und bei der Überwachung nach Hindernissen herauszufiltern.

Um den Anhänger stabiler ausführen zu können, besteht eine Möglichkeit an den offenen Enden des Spaltraums des Anhängers Versteifungsstreben, insbesondere dünne Streben einzubauen. Diese Strebe würden jedoch von dem Laserscanner als Hindernis erkannt und zu einer Verletzung des Schutzbereiches und damit zur Abschaltung der Antriebe des autonomen Fahrzeugs führen.

Wenn die Position des Anhängers und damit auch die Position der Strebe im Bezug zum autonomen Fahrzeug bekannt ist, z.B. durch den oben beschriebenen Sensor, können aus den Signalen des berührungslos detektierenden Abstandssensor die Streben erkannt und herausgefiltert werden. Bei der Überwachung des Schutzfeldes werden die Streben folglich nicht als Hindernisse gewertet.

Dabei wird zwar das Schutzfeld unterbrochen, aber wenn die Strebe dünn genug ist, dann ist in der relevanten Entfernung die Verschattung so klein, dass Personen von den anderen Laserstrahlen immer noch erkannt werden können.

Damit dies insgesamt sicher ist, kann der Sensor in sicherer Technik ausgeführt sein. Auch die Schutzfeldüberwachung sollte dann in sicherer Technik ausgeführt werden.

Das autonome Fahrzeug kann in einer Ausprägung ausgebildet sein, dass die Stromübertragung von außen auf das autonome Fahrzeug induktiv erfolgt.

Das autonome Fahrzeug kann in einer alternativen oder ergänzenden Ausprägung ausgebildet sein, dass es sich mithilfe einer induktiven oder optischen Spurführung autonom navigiert.

Ein erfindungsgemäßer Anhänger kann zur Erfüllung unterschiedlicher Funktionen ausgebildet sein. Der Anhänger kann zum Materialtransport eingesetzt werden. Auf dem Anhänger kann sich wenigsten ein Werkstückträger befinden. Der Anhänger kann als Arbeitsfläche von stationären Maschinen eingesetzt werden. Der Anhänger kann über einen Arbeitstisch verfügen, der insbesondere eigene Funktionen aufweist. Auf dem Anhänger kann ein Roboter angeordnet sein. Auf dem Anhänger kann ein Handhabungssystem, insbesondere mit mehreren Achsen angeordnet sein.

Der Anhänger kann so aufgebaut sein, dass er für den Transport von beispielsweise Nahrungsmitteln oder Medikamenten eingesetzt werden kann. Derartige Essenswägen bzw. Medikamentenwägen können vom autonomen Transportsystem beispielsweise in einem Krankenhaus eingesetzt werden.

Das autonomen Transportsystem bzw. das autonome Fahrzeug und/oder der Anhänger kann mit unterschiedlichen Energiespeichern verbunden sein. Die Energiespeicher können beispielsweise Batterien, Akkus und/oder Doppelschicht-Kondensatoren sein.

Das autonome Fahrzeug und/oder der Anhänger kann aber auch mit Energie über induktive Kontakte oder über Schleifkontakte versorgt werden.

Der Anhänger kann in seiner Arbeitsposition beispielsweise durch seitliche Führungen und/oder Zentrierungen, insbesondere von außen mechanisch positioniert werden.

Der Anhänger kann in einer Ausprägung aufgebaut sein, dass er an den Ecken, insbesondere auf der Seite an welcher das autonome Fahrzeug andockt, Reflektormarken aufweist, die beispielsweise eine längliche Form aufweisen können und insbesondere dünn sein können. Diese Reflektormarken hat der Laserscanner in dieser Ausführungsform der Erfindung im Blickfeld und kann damit die Winkelposition des Anhängers zum Fahrzeug bestimmen.

Der Anhänger kann aber auch so aufgebaut sein, dass er zusätzliche aktiv gelenkte Hinterräder aufweist, die über den Lenkwinkel zwischen autonomen Fahrzeug und Anhänger gesteuert werden.

Das autonome Transportsystem kann in einer Ausprägung aufgebaut sein, dass es sich bei dem Anhänger um ein Krankenbett handelt, wie es z.B. in Krankenhäusern eingesetzt wird. Das autonome Transportsystem kann dann dafür genutzt werden, Krankenbetten zu transportieren. Ein möglicher Einsatz ist die Anlieferung von Patienten in einen Operationsraum.

Der Drehpunkt des Anhängers, der seitlich das autonome Fahrzeug überragt, befindet sich bei einer Kurvenfahrt immer auf der Drehachse der Hinterräder. Dies hat zur Folge, dass der Anhänger bei einer Kurvenfahrt nicht auf die Kurvenaußenseite ausschwenkt und daher keine Gefahr für Personen oder Gegenstände darstellt, die sich in diesem Bereich befinden. Dies hat zur Folge, dass es mit dem autonomen Transportsystem möglich ist, einen Anhänger, der seitlich an einer Wand steht, von dieser mit einer Kurvenfahrt wegzuziehen, ohne dass es dabei zu einer Kollision kommt.

Dies ist auch der Fall, bei der kleinsten möglichen, vom autonomen Fahrzeug angetriebenen Drehbewegung des Anhängers, bei denen sich der Drehpunkt in der Mitte der beiden Hinterräder befindet.

Der Anhänger kann in einer Ausprägung ausgebildet sein, dass mit ihm Patienten im Rahmen von radiologischen Untersuchungen bzw. Therapien transportiert werden. Durch den Einsatz eines autonomen Transportsystems ist es nicht mehr notwendig, dass sich medizinisches Personal in die Nähe der Strahlenquellen begibt, um die Patienten dort hin zu bringen, oder sie von dort wieder abzuholen.

In einer erfindungsgemäßen Ausführungsform kann das autonome Transportsystem einen Anhänger aufweisen, der wenigstens eine, insbesondere vier, vorzugsweise im Bereich von vier Ecken eines in der Draufsicht rechteckigen oder quadratischen Anhängers, als Markierungskörper ausgebildete Reflektormarke, aufweist, wobei der wenigstens eine Markierungskörper ausgebildet ist, von dem berührungslos detektierenden Abstandssensor des autonomen Fahrzeugs erkannt und von der Steuerungsvorrichtung ausgewertet zu werden, derart, dass Kollisionen zwischen dem Anhänger und dem autonomen Fahrzeug verhindert werden.

So können beispielsweise an den Ecken des Anhängers Markierungskörper angebracht sein, die von den berührungslos detektierenden Abstandssensoren, insbesondere von Laserscannern des autonomen Fahrzeugs erkannt werden können. Die Markierungskörper können beispielsweise mit reflektierendem Material beschichtet sein. Die Markierungskörper können von dem autonomen Fahrzeug erkannt werden und ein dem autonomen Fahrzeug zugeordnete Steuerungsvorrichtung verhindert in dieser Ausführungsform eine Kollision des autonomen Fahrzeugs mit dem Anhänger.

In einer Weiterbildung kann der wenigstens eine Markierungskörper aus einem Sichtfeld des berührungslos detektierenden Abstandssensors vorzugsweise automatisch herausbewegbar, insbesondere herausschwenkbar an dem Anhänger gelagert sein.

Beim Andocken des autonomen Fahrzeugs an den Anhänger kann in einer Ausführungsform eine Kupplung des autonomen Fahrzeugs von unten in eine Aufnahme des Anhängers eingefahren werden. Die einfahrbare Kupplung hebt dann eine dem Kupplungsort zugeordnete Seite des Anhängers ein Stück nach oben. Der Kupplungsort befindet sich insoweit auf der Seite, an der sich das autonome Fahrzeug befindet. Bei einem solchen Ankuppelvorgang kann im Anhänger eine Vorrichtung, insbesondere eine Mechanik aktiviert werden, die ein Bewegen, insbesondere ein Einklappen, ein Einschwenken oder ein Einfahren der Markierungskörper, auf der Seite an der sich das autonome Fahrzeug ankoppelt, zur Folge hat. Aus diesem Grund stellen die Markierungskörper dann kein Hindernis für den Sichtbereich des berührungslos detektierenden Abstandssensors, insbesondere des Laserscanners des autonomen Fahrzeugs im Betrieb dar. Auf der Rückseite, d.h. an der dem autonomen Fahrzeug abgewandten Seite des Anhängers, bzw. der Seite die dem angekuppelten autonomen Fahrzeug gegenüberliegt, können die Markierungskörper ausgefahren bleiben. Sie stellen weiterhin eine Sicherheit dar, damit keine anderweitigen autonomen Fahrzeuge mit dem Anhänger kollidieren.

In einer alternativen oder ergänzenden Ausführungsform kann das autonome Fahrzeug des autonomen Transportsystems eine Steuerungsvorrichtung aufweisen, die ausgebildet ist, in Abhängigkeit einer Winkelstellung zwischen dem Anhänger und dem autonomen Fahrzeug unterschiedliche Schutzfelder vorzugeben, die durch den berührungslos detektierenden Abstandssensor auf Eindringen von Objekten überwacht werden kann.

Die Schutzfelder des autonomen Fahrzeugs können neben der Geschwindigkeit und des Winkels zwischen Anhänger und autonomen Fahrzeug abhängig davon geschaltet werden, ob ein Anhänger angekoppelt ist oder nicht. Ohne Anhänger kann das Schutzfeld so breit wie das autonome Fahrzeug sein, d.h. das autonome Fahrzeug kann einen abgestellten Anhänger in einer linearen Bewegung unterfahren, ohne dass die heruntergeklappten Markierungskörper des Anhängers in das Schutzfeld ragen, d.h. das Schutzfeld verletzen. Nach dem Ankoppeln des Anhängers kann das Schutzfeld verbreitert werden, beispielsweise mindestens auf die Breite des Anhängers.

Das autonome Transportsystem kann eine im Anhänger vorgesehenen Vorrichtung, insbesondere eine Mechanik aufweisen, die bei einem Ankuppelvorgang ein Bewegen, insbesondere ein Einklappen, ein Einschwenken oder ein Einfahren der Markierungskörper, auf der Seite an der sich das autonome Fahrzeug ankoppelt, auslöst.

In einer weiteren Ausführung kann das autonome Transportsystem eine mit dem autonomen Fahrzeug verbundene, insbesondere in sicherer Technik ausgeführte Sensoranordnung aufweisen, welche mit einer mit dem Anhänger verbundenen Markeranordnung eine Bestimmungseinrichtung bildet, die ausgebildet ist, einen von dem autonomen Fahrzeug bezüglich des Anhängers eingenommenen Fahrrichtungswinkel einem von mehreren vorgegebenen Fahrrichtungswinkelbereichen zuzuordnen.

Dabei kann die Sensoranordnung drei Näherungsschalter aufweisen, die in gleichen Abständen voneinander auf einem zum Drehpunkt des autonomen Fahrzeugs selben Radius angeordnet sind und der Anhänger als Markeranordnung einen in Richtung der Näherungsschalter vorspringenden Kreisbogenabschnitt, insbesondere kreisbogenabschnittsförmigen Blechvorsprung aufweisen, der eine zusammen mit den Näherungsschaltern die Fahrrichtungswinkelbereiche definierende Bogenlänge aufweist.

So kann beispielsweise ein erster Fahrrichtungswinkelbereich von minus 5 Grad bis plus fünf Grad definiert sein, der im Wesentlichen einer Geradeausfahrt des autonomen Transportsystems entspricht. Ein zweiter Fahrrichtungswinkelbereich kann beispielsweise von plus 6 Grad bis plus 50 Grad definiert sein, der im Wesentlichen einer weiten Kurvenfahrt des autonomen Transportsystems entspricht. Ein dritter Fahrrichtungswinkelbereich kann beispielsweise von plus 51 Grad bis plus 95 Grad definiert sein, der im Wesentlichen einer engen Kurvenfahrt des autonomen Transportsystems entspricht. Zusätzlich kann ein vierter Fahrrichtungswinkelbereich beispielsweise von plus 95 Grad bis plus 180 Grad definiert sein, der im Wesentlichen einem Rückrangieren des autonomen Transportsystems entspricht.

Unter Vorgabe dieser Fahrrichtungswinkelbereich können beispielsweise drei Näherungsschalter am autonomen Fahrzeug angebracht sein, die bezüglich eines Drehpunkts des autonomen Fahrzeugs auf demselben Kreisbogenabschnitt, d.h. auf demselben Radius in Abständen von 45 Winkelgrad voneinander entfernt angeordnet sind. Die Markeranordnung, insbesondere der kreisbogenabschnittsförmige Blechvorsprung, kann sich dabei über einen Winkel von ca. 90 Grad am Anhänger um den Drehpunkt erstrecken.

So können in dem ersten Fahrrichtungswinkelbereich alle drei Näherungsschalter innerhalb des Bogenabschnitts der Markeranordnung liegen, wobei alle drei Näherungsschalter ein Signal liefern. Im zweiten Fahrrichtungswinkelbereich kommt einer der drei Näherungsschalter aus dem Bogenabschnitt der Markeranordnung heraus, so dass nur die beiden verbleibenden Näherungsschalter ein Signal liefern und der eine Näherungsschalter kein Signal liefert. Im dritten Fahrrichtungswinkelbereich kommen zwei der drei Näherungsschalter aus dem Bogenabschnitt der Markeranordnung heraus, so dass nur ein verbleibender Näherungsschalter ein Signal liefert und die beiden anderen Näherungsschalter kein Signal liefern. Im vierten Fahrrichtungswinkelbereich kommen alle drei Näherungsschalter aus dem Bogenabschnitt der Markeranordnung heraus, so dass keiner der drei Näherungsschalter ein Signal liefern.

Dieser Zusammenhang wurde für einen beispielhaft rechtsseitigen Winkelbereich von 180 Grad beschrieben. Analoges gilt jedoch auch für einen linksseitigen Winkelbereich von 0 bis minus 180 Grad sinngemäß, so dass sich im beschriebenen Ausführungsbeispiel insgesamt, d.h. über 360 Grad betrachtet, sieben Fahrrichtungswinkelbereiche ergeben.

Jedem Fahrrichtungswinkelbereiche kann ein unterschiedliches erfindungsgemäß beschriebenes Schutzfeld zugeordnet werden.

Die Sensoranordnung, insbesondere die Näherungsschalter können Initiatoren sein. Die Sensoranordnung, insbesondere die Näherungsschalter können berührungsfrei reagieren. Beispielsweise können die Näherungsschalter als kapazitive, induktive, magnetische, inklusive Hall-Effekt, und/oder optische Sensoren sein. Die Sensoranordnung, insbesondere die Näherungsschalter können in sicherer Technik ausgebildet sein, d.h. die Näherungsschalter können beispielsweise redundant und/oder diversitär ausgeführt sein.

Wie beschrieben, kann das autonome Transportsystem eine Markeranordnung und eine Sensoranordnung aufweisen, wobei die Sensoranordnung mit einer Steuerungsvorrichtung verbunden ist, die ausgebildet ist, in Abhängigkeit eines, aufgrund des eingenommenen Fahrrichtungswinkels zwischen dem Anhänger und dem autonomen Fahrzeug bestimmten, momentanen Fahrrichtungswinkelbereiches eines dem momentanen Fahrrichtungswinkelbereich zugeordnetes Schutzfeld aus unterschiedlichen Schutzfeldern auszuwählen, das durch den berührungslos detektierenden Abstandssensor auf Eindringen von Objekten überwacht wird.

Verschiedene Ausführungsbeispiele der Erfindung sind exemplarisch in den beigefügten Figuren dargestellt, die erfindungsgemäße autonome Fahrzeuge, zugehörige Anhänger und autonome Transportsysteme, aufweisend ein solches autonomes Fahrzeug und einen solchen Anhänger, zeigen.

Es zeigen:
- Fig. 1: eine perspektivische Ansicht von oben einer schematischen Darstellung einer Ausführung eines erfindungsgemäßen autonomen Fahrzeugs;
- Fig. 2: eine perspektivische Ansicht von unten einer schematischen Darstellung des autonomen Fahrzeugs gemäß Fig. 1;
- Fig. 3: eine schematische Draufsicht auf ein erfindungsgemäßes autonomes Transportsystem mit dem autonomen Fahrzeug gemäß Fig. 1 und einer Teilansicht eines erfindungsgemäßen Anhängers;
- Fig. 4: eine perspektivische Ansicht von unten einer schematischen Darstellung eines erfindungsgemäßen Anhängers;
- Fig. 5: eine Seitenansicht des autonomen Transportsystems gemäß Fig. 3;
- Fig. 6: eine Ansicht von unten des autonomen Transportsystems gemäß Fig. 3;
- Fig. 7a: eine perspektivische Ansicht von vorne des autonomen Transportsystems gemäß Fig. 3 mit erfindungsgemäßen Reflektormarken;
- Fig. 7b: eine perspektivische Ansicht von vorne des autonomen Transportsystems in einer Variante mit aufklappbaren Rädern;
- Fig. 8: eine Teilansicht von unten des autonomen Transportsystems gemäß Fig. 3 mit großer Abschattung durch einen Steg des Anhängerfahrwerks;
- Fig. 9: eine Teilansicht von unten des autonomen Transportsystems gemäß Fig. 3 mit kleiner Abschattung durch den Steg des Anhängerfahrwerks;
- Fig. 10a-c: schematische Draufsichten auf das autonome Fahrzeug ohne Anhänger mit verschiedenen Schutzfeldern in Abhängigkeit der Fahrtgeschwindigkeit;
- Fig. 11a-b: schematische Draufsichten auf das autonome Fahrzeug mit Anhänger mit verschiedenen Schutzfeldern in Abhängigkeit der Fahrtgeschwindigkeit;
- Fig. 12a-d: schematische Draufsichten auf das autonome Fahrzeug mit Anhänger mit dargestellten Schutzfeldern bei unterschiedlicher Winkelstellung von Anhänger und autonomen Fahrzeug von 0 bis zu 45 Grad;
- Fig. 13a-d: schematische Draufsichten auf das autonome Fahrzeug mit Anhänger mit Schutzfelder bei unterschiedlicher Winkelstellung von Anhänger und autonomen Fahrzeug über 45 Grad; und
- Fig. 14a-d: schematische Draufsichten auf ein weiteres autonomes Fahrzeug mit Anhänger mit einer Sensoranordnung und Markeranordnung in verschiedenen Fahrrichtungswinkeln.

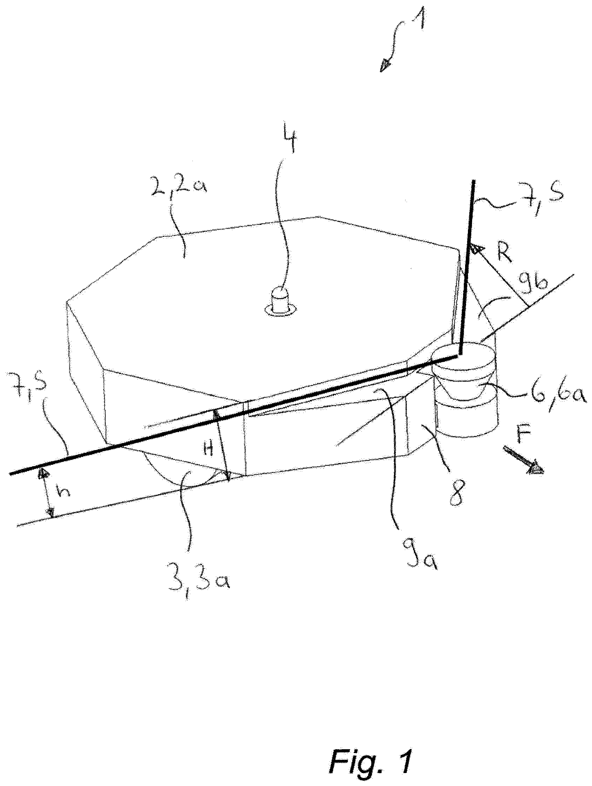

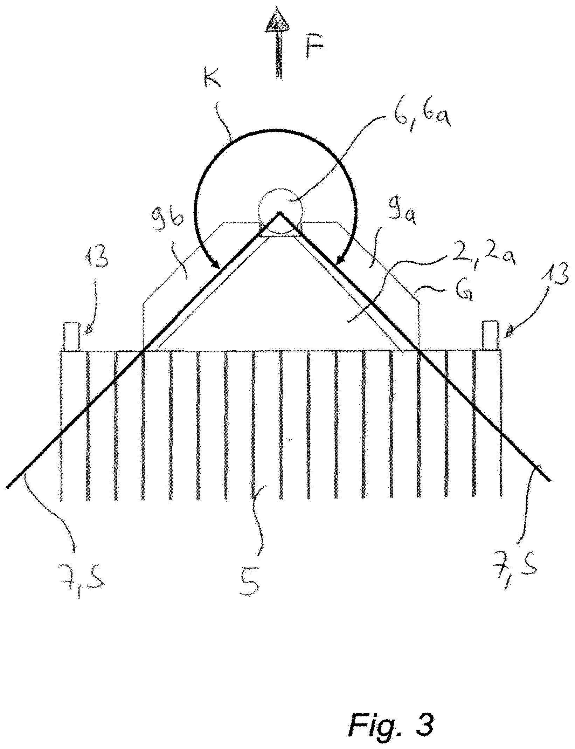

In der Fig. 1 ist eine beispielhafte Ausführung eines autonomen Fahrzeugs 1 dargestellt. Das autonome Fahrzeug 1 weist einen Fahrzeugkörper 2, ein Fahrwerk 3 mit wenigstens einem angetriebenen Rad 3a, eine Kupplung 4 zum Ankuppeln eines Anhängers 5 (Fig. 3) an das autonome Fahrzeug 1 auf.

Das autonome Fahrzeug 1 weist mindestens einen berührungslos detektierenden Abstandssensor 6 auf, der eingerichtet ist, Signale 7 in wenigstens eine Senderichtung S auszusenden. Der berührungslos detektierende Abstandssensor 6 ist am autonomen Fahrzeug 1 derart angeordnet, dass die Signale 7 in einer Höhe h ausgesendet werden, die unter einer maximalen Erhebung H des Fahrzeugkörpers 2 liegt, und deren Senderichtung S eine Richtungskomponente R aufweist, die in einer Draufsicht auf das autonome Fahrzeug 1 den Grundriss G des Fahrzeugkörpers 2 schneidet (Fig. 3).

Wie in Fig. 1 dargestellt, ist in der gezeigten Ausführungsform der berührungslos detektierende Abstandssensor 6 an einer in Fahrtrichtung F des autonomen Fahrzeugs 1 vorderen Seite 8 des Fahrzeugkörpers 1 angeordnet. Dabei weist erfindungsgemäß der berührungslos detektierende Abstandssensor 6 eine Senderichtung S mit einer entgegen der Fahrtrichtung F weisende Richtungskomponente R auf.

Der Fahrzeugkörper 2 wird im dargestellten Ausführungsbeispiel von einem Gehäuse 2a gebildet. Das Gehäuse 2a weist eine achteckige Grundform auf. Von dieser achteckigen Grundform sind Abschnitte 9a, 9b, die in der Senderichtung des berührungslos detektierenden Abstandssensors 6 liegen, ausgespart.

Am Fahrzeugkörper 2 ist die Kupplung 4 in einer zentralen Mitte der Oberseite des Gehäuses 2a angeordnet. Das autonome Fahrzeug 1 ist um diese Kupplung 4 im Stand drehbar. Dazu ist das Fahrwerk 3 ausgebildet, das autonome Fahrzeug 1 im Stand um eine senkrechte Symmetrieachse der Kupplung 4 zu drehen.

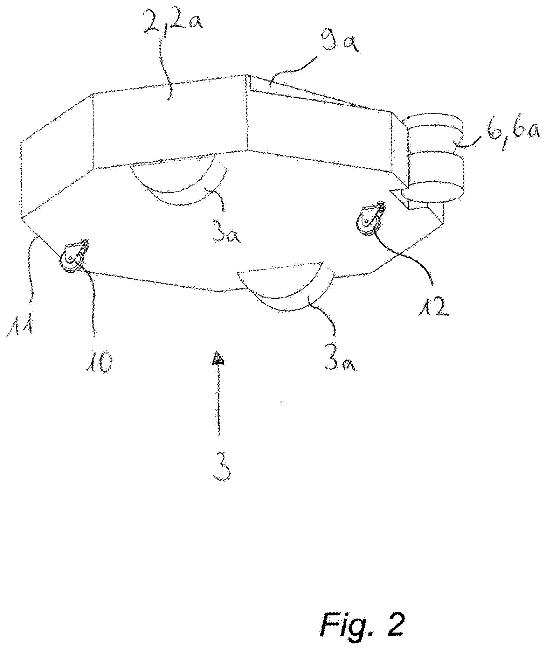

Wie in Fig. 2 schematisch gezeigt, kann das autonome Fahrzeug 1 ein Fahrwerk 3 aufweisen, bei dem ein erstes Stützrad 10 auf der hinteren Seite 11 des autonomen Fahrzeugs 1 angebracht ist. Dieses erste Stützrad 10 kann ungefedert sein. Unter Verwendung lediglich dieses einen ersten Stützrads 10 wird zusammen mit den zwei Antriebsrädern 3a eine Dreipunktabstützung gebildet. Deren Ebene kann parallel zur Oberseite des autonomen Fahrzeugs 1 ausgerichtet sein. Wenn das autonome Fahrzeug 1 an einen erfindungsgemäßen Anhänger 5 angekoppelt ist und dieses hinter sich herzieht, entsteht ein Moment auf das autonome Fahrzeug 1, welches sicherstellt, dass das autonome Fahrzeug 1 parallel zum Boden ausgerichtet ist. Hierdurch wird sichergestellt, dass der berührungslos detektierende Abstandssensor 6 bzw. der Laserscanner 6a während einer Fahrt mit dem Anhänger 5 seine Signale 7 in einer parallel zum Boden verlaufenden Richtung aussendet.

Gemäß einem Ausführungsbeispiel kann ein zweites Stützrad 12 in einem Bereich der Vorderseite 8 angeordnet und insbesondere federnd aufgehängt sein. Dadurch kann sich das zweite Stützrad 12 in der Höhe horizontal dem Boden anpassen. Die Federstärke kann dabei so bemessen sein, dass das autonome Fahrzeug 1 mit unbeladenem Anhänger 5 im Fahrbetrieb mit allen vier Rädern den Boden berührt. Hierdurch wird auch im unbeladenen Betrieb des Anhängers 5 sichergestellt, dass der berührungslos detektierende Abstandssensor 6 bzw. der Laserscanner 6a parallel zum Boden ausgerichtet ist. Weiterhin darf die Federspannung nicht so groß sein, dass hierdurch ein Antriebsrad des autonomen Fahrzeugs 1 den Bodenkontakt verliert. Die Federung kann aber auch in der Ausführung aufgebaut werden, dass das vordere Stützrad 12 ungefedert und das hintere Stützrad 10 gefedert ist. Hierdurch ist es möglich die Bremskräfte aufzunehmen, ohne dass dies eine Veränderung der Lage des Abstandssensors 6 zur Folge hat.

Das autonome Fahrzeug 1 kann mit einer Bremse ausgestattet sein, die geöffnet wird, wenn das autonome Fahrzeug 1 den Anhänger mit dem Stempel, d.h. der Kupplung 4 hochhebt. Die Bremse kann dabei auf unterschiedliche Weise aufgebaut werden. So kann die Bremse zwischen den Rädern 16a, 16b, 16c, 16d und dem Fahrwerk 3 oder zwischen Boden und autonomen Fahrzeug 1 abgeordnet sein.

Die Fig. 3 zeigt schematisch, wie der detektierende Abstandssensor 6 bzw. der Laserscanner 6a am autonomen Fahrzeug 1 angeordnet und/oder eingerichtet ist. Der detektierende Abstandssensor 6 bzw. der Laserscanner 6a sendet Signale 7 in Senderichtungen S aus, die in einem Sektor K liegen, der sich ausgehend von der Fahrtrichtung F des autonomen Fahrzeugs 1 über einen Winkelbereich von minus 135 Grad bis plus 135 Grad erstreckt.

Der Anhänger kann, wie in Fig. 3 schematisch dargestellt, in einer Ausprägung ausgebildet sein, in welcher der detektierende Abstandssensor 6 bzw. der Laserscanner 6a bis zu einem bestimmten Lenkwinkel, d.h. dem Winkel zwischen dem autonomen Fahrzeug 1 und dem Anhänger 5 freien Blick hat. Wenn sich das autonome Fahrzeug 1 gegenüber dem Anhänger 5 weiterdreht, erkennt der der detektierende Abstandssensor 6 bzw. der Laserscanner 6a die Aufhängung bzw. das Anhängerfahrwerk 13, was durch eine Steuerungsvorrichtung als optischer Anschlag gewertet werden kann. Der optische Anschlag kann insbesondere in sicherer Technik erfasst werden und befindet sich immer zwischen zwei Maximalwerten.

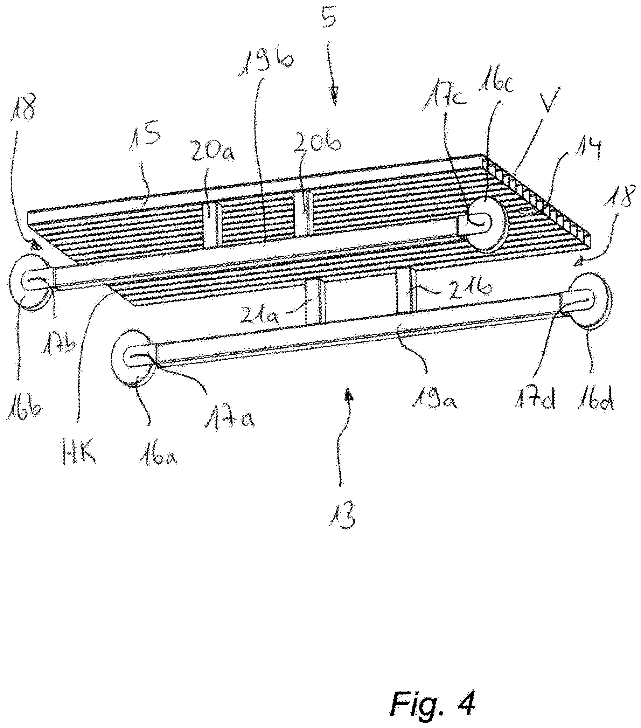

Das Anhängerfahrwerk 13 ist in Fig. 4 näher dargestellt. Der Anhänger 5 weist eine Gegenkupplung 14 zum Ankuppeln an die Kupplung 4 des autonomen Fahrzeugs 1 auf. Der Anhänger 5 umfasst in der in Fig. 4 gezeigten Ausführungsform einen Tragboden 15, vier antriebslose Räder 16a, 16b, 16c, 16d auf, die jeweils an einer Radlagerung 17a, 17b, 17c, 17d jeweils um eine Drehachse drehbar gelagert sind.

Die Radlagerungen 17a, 17b, 17c, 17d sind mit dem Tragboden 15 durch das Anhängerfahrwerk 13 verbunden. Das Anhängerfahrwerk 13 weist im dargestellten Ausführungsbeispiel zwei parallel verlaufende, an einer linken und einer rechten Seite des Anhängers 5 verlaufende Querstreben 19a, 19b auf. Jede der Querstreben 19a, 19b ist über wenigstens eine, im Ausführungsbeispiel wie dargestellt über zwei Traversen 20a, 20b und 21a, 21b mit dem Tragboden 15 verbunden. Das Anhängerfahrwerk 13 ist ausgebildet zwischen den Rädern 16a, 16b, 16c, 16d und dem Tragboden 15 einen optisch durchlässigen Spaltraum 18 für die Signale 7 des berührungslos detektierenden Abstandssensors 6 des autonomen Fahrzeugs 1 zu bilden.

Das Anhängerfahrwerk 13 ist mit einem Spaltraum 18 ausgebildet, der optisch durchlässig ist für Signale 7, die von dem berührungslos detektierenden Abstandssensor 6 des an der Gegenkupplung 14 angekuppelten autonomen Fahrzeugs 1 mit Senderichtungen S ausgesandt werden, die, wie insbesondere auch in Fig. 3 illustriert, in einem Sektor K liegen, der sich ausgehend von einer Fahrtrichtung F des autonomen Fahrzeugs 1, über einen Winkelbereich von minus 135 Grad bis plus 135 Grad erstreckt.

Die Drehachsen der Räder 16a, 16b, 16c, 16d und der Radlagerungen 17a, 17b, 17c, 17d sind parallel zu einer rechtwinkelig zur Fahrtrichtung F des Anhängerfahrwerks 13 verlaufenden geraden Vorderkante V und geraden Hinterkante HK des Tragbodens 15, insbesondere eine rechteckige Umfangskontur aufweisend, ausgerichtet.

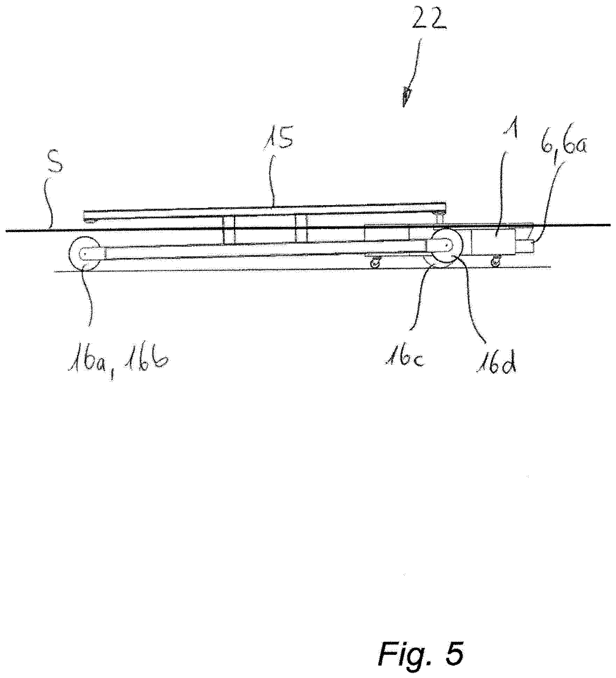

Wie in Fig. 5 dargestellt sind im dargestellten Ausführungsbeispiel die Drehachsen der Räder 16a, 16b, 16c, 16d und der Radlagerungen 17a, 17b, 17c, 17d direkt unter der Vorderkante V und der Hinterkante HK angeordnet.

Der Anhänger 5 ist im Ausführungsbeispiel so aufgebaut, dass er aus einer Grundplatte als Tragboden 15 besteht, an deren vier Ecken die frei drehbaren, nicht lenkbaren Räder 16a, 16b, 16c, 16d angeordnet sind. Die Räder 16a, 16b, 16c, 16d sind dabei so angebracht und ihr Durchmesser ist so gewählt, dass der berührungslos detektierenden Abstandssensor 6 bzw. der Laserscanner 6a über sie hinwegblicken kann, wie durch die Signalrichtung S angedeutet.

Weiterhin ist das Anhängerfahrwerk 13, insbesondere die Traversen 20a, 20b und 21a, 21b so zwischen den Rädern 16a, 16b, 16c, 16d und den Radlagerungen 17a, 17b, 17c, 17d und dem Tragboden 15 so angebracht, dass diese bei einer Geradeausfahrt des autonomen Transportsystems 22 kein Hindernis für den berührungslos detektierenden Abstandssensor 6 bzw. den Laserscanner 6a sind.

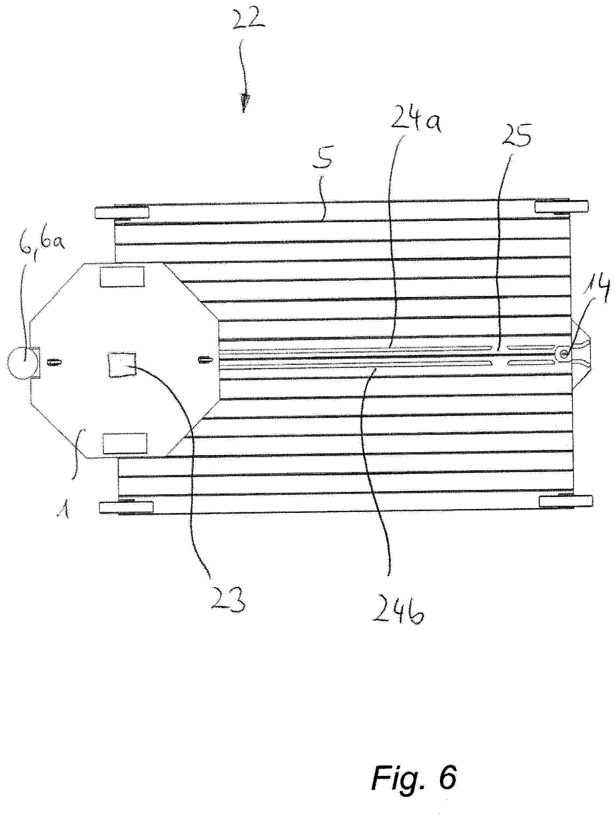

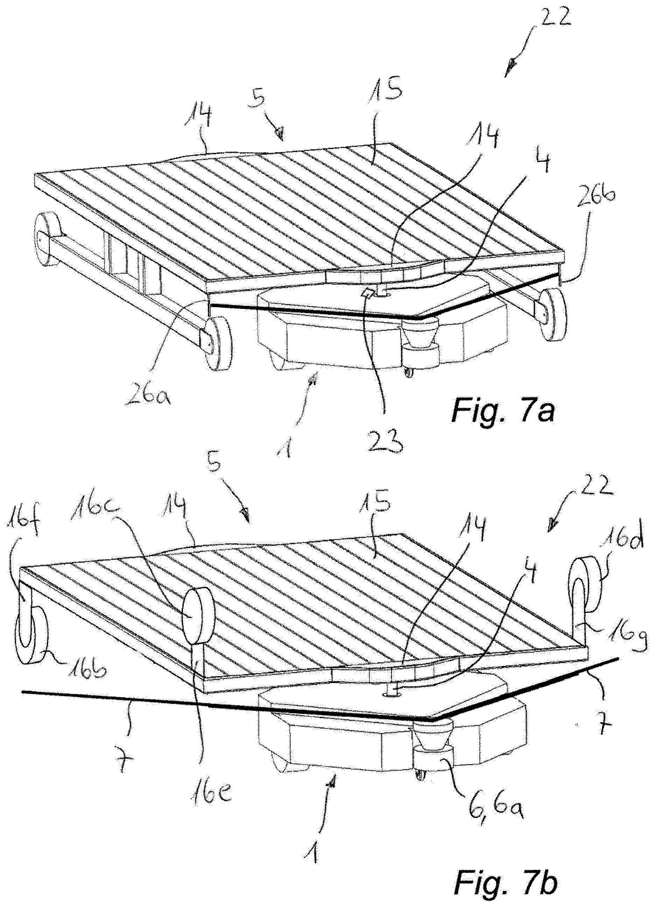

Die Fig. 5 zeigt ein Beispiel eines autonomen Transportsystems 22 mit einem autonomen Fahrzeug 1 und einem Anhänger 5. Das autonome Transportsystems 22 weist eine Messvorrichtung 23 auf, die eingerichtet ist, einen sich durch eine erste Orientierung des autonomen Fahrzeugs 1 und eine zweite Orientierung des Anhängers 5 einstellenden Lenkwinkel durch Messen der Lagen von Kupplung 4 und Gegenkupplung 14 (Fig. 6 in Verbindung mit Fig. 7) zu bestimmen.

Die Fig. 6 zeigt von der Unterseite des Tragbodens 15 betrachtet die Gegenkupplung 14, welche eine Aufnahme für die Kupplung 4 des autonomen Fahrzeugs 1 bildet.

Zum Andocken kann das autonome Fahrzeug 1 unter den Anhänger 5 fahren und mit einem Stempel der Kupplung 4 in die Aufnahme der Gegenkupplung 14 drücken. Der Stempel des autonomen Fahrzeugs 1 kann sich in der Aufnahme des Anhängers 5 drehen.

Der im Ausführungsbeispiel der Fig. 6 dargestellte Anhänger 5 weist auf der Unterseite Führungen 24a, 24b auf, in denen sich das autonome Fahrzeug 1 bzw. dessen Kupplung 4 auf seiner Oberseite entlang der entsprechenden Gegenstücke, d.h. den Führungen 24a, 24b, welche die Gegenkupplung 14 aufweisen, bewegen kann. Die Führungen 24a, 24b haben an bestimmten Stellen Aussparungen 25 damit sich das autonome Fahrzeug 1 in der Andockposition um sich selbst drehen kann, in welcher das autonome Fahrzeug 1 den Anhänger 5 mit dem Stempel der Kupplung 4 anhebt.

Die Führungen 24a, 24b sind so angeordnet, dass sie dem autonomen Fahrzeug 1 eine Einfuhrhilfe beim Andocken an den Anhänger 5 gewährleisten und es dem autonome Fahrzeug 1 ermöglichen von der einen Andockposition zu anderen Andockposition überzuwechseln.

Auch die Fig. 7a zeigt, wie das autonome Fahrzeug 1 mittels einer Stempel-artigen Kupplung 4 mit dem Anhänger 5 verbunden werden kann. Die Kupplung 4 ist dazu mittig am Fahrzeugkörper 2, dem Fahrwerk 3 bzw. dem Gehäuse 2a befestigt. Die Aufnahme am Anhänger 5, d.h. die Gegenkupplung 14 für die Stempelartige Kupplung 4, befindet sich mittig zwischen den Rädern 16a, 16b, 16c, 16d des Anhängers 5, wie auch in Fig. 6 gezeigt.

Der im Ausführungsbeispiel der Fig. 7a dargestellte Anhänger 5 verfügt über Reflektormarken 26a, 26b. Die Reflektormarken 26a, 26b sind im dargestellten Ausführungsbeispiel als kurze, dünne Stäbe ausgebildet. Diese Reflektormarken 26a, 26b sind unterhalb des Tragbodens 15 angeordnet. Mittels der Reflektormarken 26a, 26b kann das autonome Fahrzeug 1 mit optischen Mitteln unter dem Anhänger 5 navigieren. Die Reflektormarken 26a, 26b können aber auch in einer anderen Ausführung beispielsweise auf der Innenseite des Anhängerfahrwerks 13, insbesondere der Traversen 20a, 20b und 21a, 21b des Anhängers 5 angebracht sein.

Der Anhänger 5 kann gemäß Fig. 7b anders aufgebaut sein, damit die Räder 16a, 16b, 16c, 16d aus dem optischen Bereich der Signale 7 des berührungslos detektierenden Abstandssensors 6 weggeklappt werden können.

Der Anhänger 5 kann in dieser Ausprägung derart aufgebaut sein, dass die Räder 16a, 16b, 16c, 16d, bzw. die Füße 16e, 16f, 16g, 16h des Anhängers 5, auf der Seite an der sich das autonome Fahrzeug 1 andockt, wegklappen können. Die Wegklappbewegung kann durch das Einfahren des Stempels bzw. der Kupplung 4 des autonomen Fahrzeugs 1 in das Gegenstück, d.h. die Gegenkupplung 14 des Anhängers 5, ausgelöst werden.

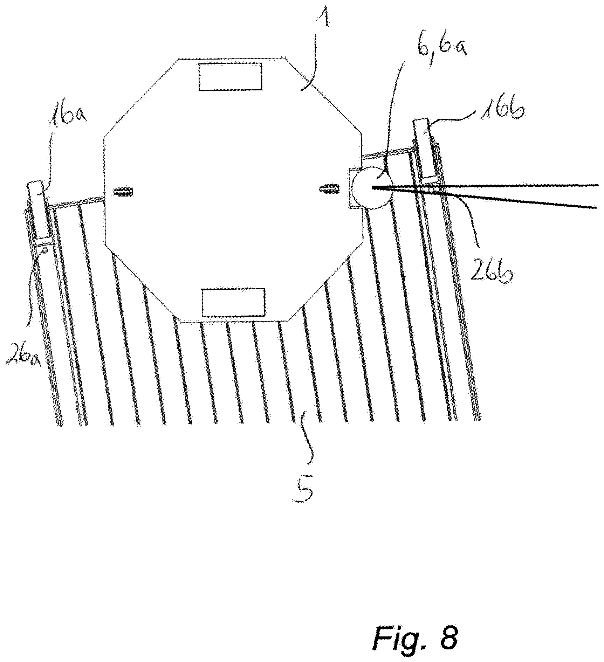

Wie in Fig. 8 dargestellt kann sich das autonome Fahrzeug 1 unter dem Anhänger 5 drehen, da es in der dargestellten Ausführung an seiner breitesten Stelle schmaler ist als der Radabstand des Anhängers 5.

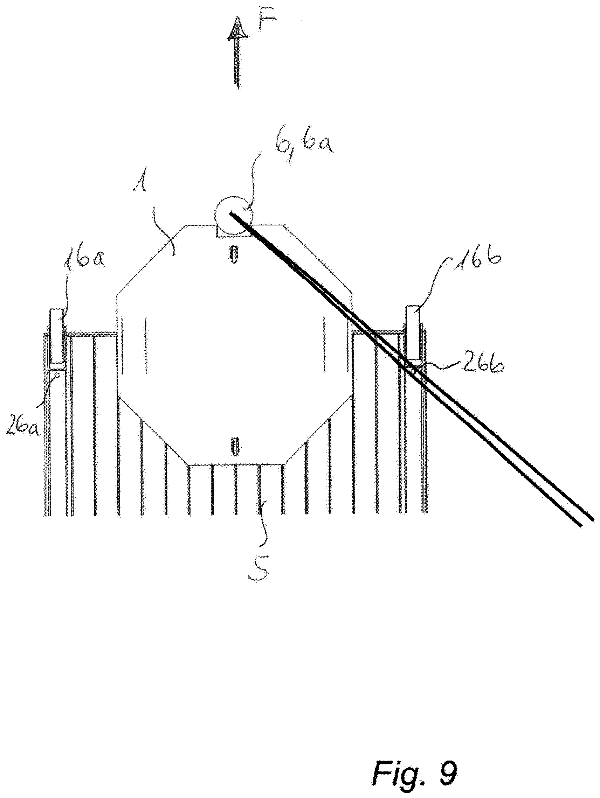

Wenn sich das autonome Fahrzeug 1 zu einem der Andockpositionen hin bewegt, wie in Fig. 8 gezeigt, kann es gegebenenfalls im letzten Stück der Bewegung, auf der jeweiligen Vorderseite des Anhängers 5, unter diesem hervorragen, wie in den Figuren 8 und 9 dargestellt. Ein letztes Stück der Bewegung zum Andocken kann über den berührungslos detektierenden Abstandssensor 6 bzw. den Scanner 6a des autonomen Fahrzeugs 1 abgesichert werden. Bei dieser Bewegung blickt das autonome Fahrzeug 1 mit dem berührungslos detektierenden Abstandssensor 6 bzw. dem Scanner 6a in Fahrtrichtung F, was auch die weitere Bewegungsrichtung ist. Somit ist das autonome Fahrzeug 1 bei dieser Bewegung für die nachfolgende Fahrt, wie in Fig. 9 gezeigt, gleich richtig orientiert.

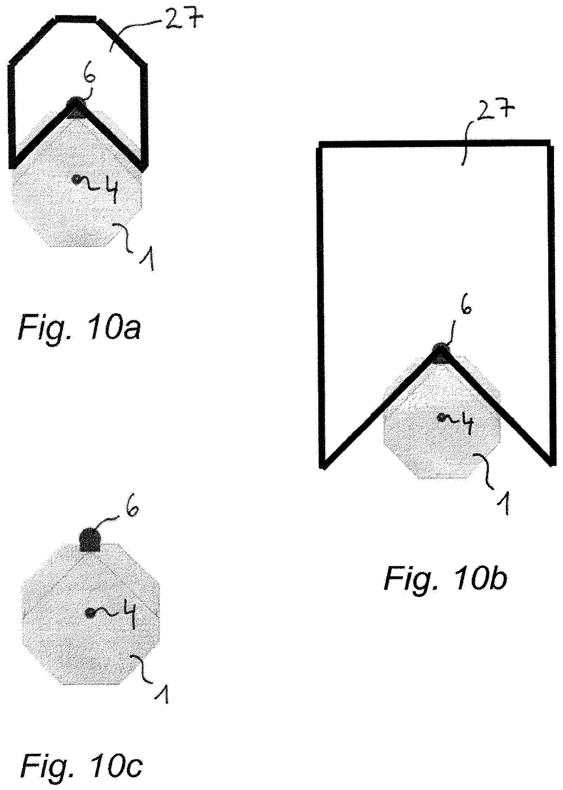

In den Fig. 10a bis Fig. 13d sind schematisch beispielhaft unterschiedlich ausgebildete Schutzfelder 27 in Abhängigkeit der Geschwindigkeit des autonomen Fahrzeugs 1 und in Abhängigkeit einer Winkelstellung zwischen dem Anhänger 5 und dem autonomen Fahrzeug 1 aufgezeigt.

Die Fig. 10a zeigt das autonome Fahrzeug 1 in langsamer Fahrt ohne Anhänger 5. Als langsame Fahrt kann beispielsweise ein Geschwindigkeit von kleiner 0,3 Meter in der Sekunde angesehen werden. Das Schutzfeld 27 weist eine Breite auf, die der Breite des autonomen Fahrzeugs 1 zumindest weitgehend entspricht. Das Schutzfeld 27 erstreckt sich in Fahrtrichtung des autonomen Fahrzeugs 1 zumindest im Wesentlichen über eine Strecke, die der Länge und/oder Breite des autonomen Fahrzeugs 1 entspricht. Die äußeren Ecken des Schutzfeldes 27 können abgeschrägt oder abgerundet sein.

Die Fig. 10b zeigt das autonome Fahrzeug 1 in schneller Fahrt ohne Anhänger 5. Als schnelle Fahrt kann beispielsweise ein Geschwindigkeit von größer oder gleich 0,3 Meter in der Sekunde angesehen werden. Das Schutzfeld 27 weist eine Breite auf, die mindestens die Breite des autonomen Fahrzeugs 1 entspricht. Das Schutzfeld 27 erstreckt sich in Fahrtrichtung des autonomen Fahrzeugs 1 zumindest über eine Strecke, die doppelt so groß ist, wie die Länge und/oder Breite des autonomen Fahrzeugs 1.

Wenn sich das autonome Fahrzeug 1 um seine eigene Achse dreht, wie in Fig. 10c angedeutet, kann das Schutzfeld 27 abgeschaltet bzw. nicht aktiv sein.

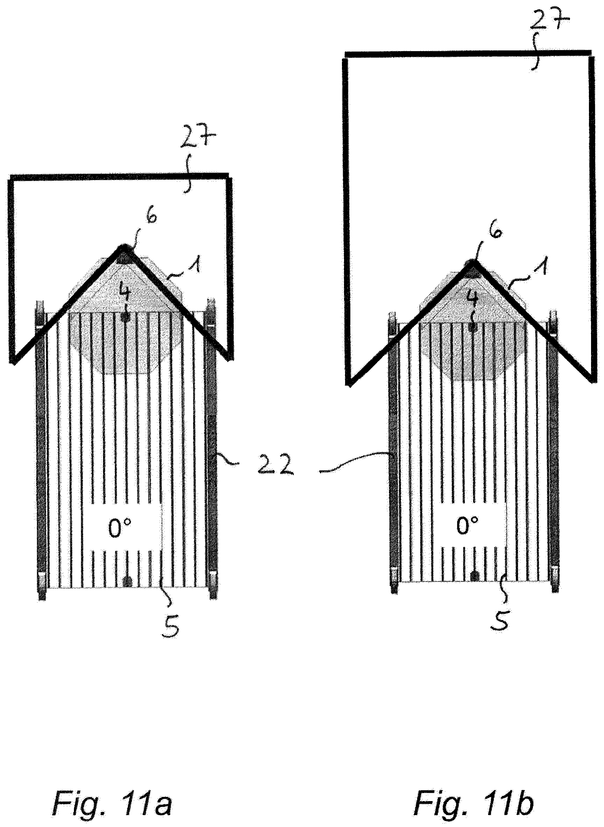

Die Fig. 11a zeigt das autonome Fahrzeug 1 in langsamer Fahrt mit Anhänger 5. Als langsame Fahrt kann beispielsweise ein Geschwindigkeit von kleiner 0,3 Meter in der Sekunde angesehen werden. Das Schutzfeld 27 weist eine Breite auf, die der Breite des Anhängers 5 zumindest weitgehend entspricht oder geringfügig größer ist. Das Schutzfeld 27 erstreckt sich in Fahrtrichtung des autonomen Fahrzeugs 1 zumindest im Wesentlichen über eine Strecke, die der Länge und/oder Breite des autonomen Fahrzeugs 1 entspricht.

Die Fig. 11b zeigt das autonome Fahrzeug 1 in schneller Fahrt mit Anhänger 5. Als schnelle Fahrt kann beispielsweise ein Geschwindigkeit von größer oder gleich 0,3 Meter in der Sekunde angesehen werden. Das Schutzfeld 27 weist eine Breite auf, die mindestens die Breite des Anhängers 5 entspricht. Das Schutzfeld erstreckt sich in Fahrtrichtung des autonomen Fahrzeugs 1 zumindest über eine Strecke, die so groß ist, wie die Länge des Anhängers 5.

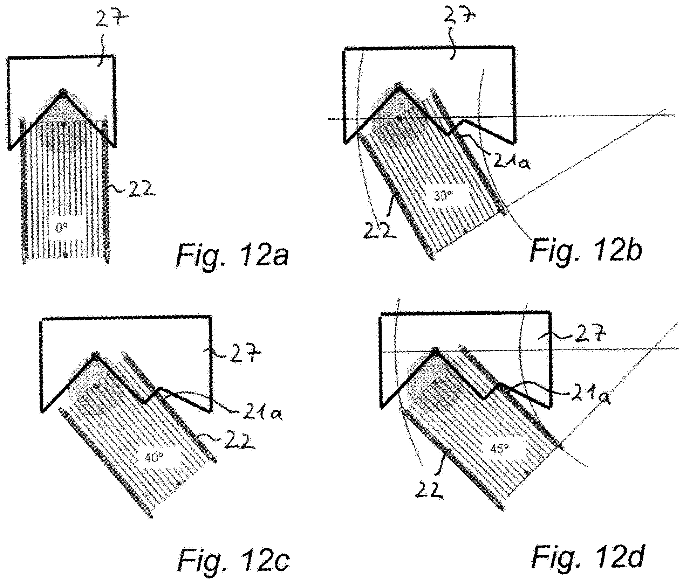

Das Schutzfeld 27 gemäß Fig. 12a kann demjenigen Schutzfeld 27 der Fig. 11a zumindest im Wesentlichen entsprechen.

Die Fig. 12b zeigt ein Schutzfeld 27 bei einer Winkelstellung zwischen dem Anhänger 5 und dem autonomen Fahrzeug 1 von 30 Grad. Gegenüber dem Schutzfeld 27 gemäß Fig. 12a ist das Schutzfeld 27 gemäß 12b um einen Anteil im Bereich der Traverse 21a reduziert. Gleichzeitig ist das Schutzfeld 27 um eine Fläche in Abbiegerichtung, d.h. gemäß dem Beispiel der dargestellten Abbiegerichtung nach rechts, erweitert, die einer Breite des Anhängers 5 aufgrund eines Ausschwenkens des Anhängers 5 wegen der Winkelstellung zwischen dem Anhänger 5 und dem autonomen Fahrzeug 1 zumindest im Wesentlichen entspricht.

Die Fig. 12c zeigt ein Schutzfeld 27 bei einer Winkelstellung zwischen dem Anhänger 5 und dem autonomen Fahrzeug 1 von 40 Grad. Gegenüber dem Schutzfeld 27 gemäß Fig. 12a ist das Schutzfeld 27 gemäß 12c um einen Anteil im Bereich der Traverse 21a reduziert. Gleichzeitig ist das Schutzfeld 27 um eine Fläche in Abbiegerichtung, d.h. gemäß dem Beispiel der dargestellten Abbiegerichtung nach rechts, erweitert, die einer Breite des Anhängers 5 aufgrund eines Ausschwenkens des Anhängers 5 wegen der Winkelstellung zwischen dem Anhänger 5 und dem autonomen Fahrzeug 1 zumindest im Wesentlichen entspricht.

Die Fig. 12d zeigt ein Schutzfeld 27 bei einer Winkelstellung zwischen dem Anhänger 5 und dem autonomen Fahrzeug 1 von 45 Grad. Gegenüber dem Schutzfeld 27 gemäß Fig. 12a ist das Schutzfeld 27 gemäß 12d um einen Anteil im Bereich der Traverse 21a reduziert. Gleichzeitig ist das Schutzfeld 27 um eine Fläche in Abbiegerichtung, d.h. gemäß dem Beispiel der dargestellten Abbiegerichtung nach rechts, erweitert, die einer Breite des Anhängers 5 aufgrund eines Ausschwenkens des Anhängers 5 wegen der Winkelstellung zwischen dem Anhänger 5 und dem autonomen Fahrzeug 1 zumindest im Wesentlichen entspricht.

Wie in den Figuren 12b und 12d gezeigt, bilden die diagonal gegenüberliegenden Ecken des Anhängers 5 einen Störkonturbereich, der durch das angepasste Schutzfeld 27 vollständig abgedeckt ist.

Ab einer Winkelstellung zwischen dem Anhänger 5 und dem autonomen Fahrzeug 1 von mehr als 45 Grad kann das Schutzfeld 27 gegenüber den erweiterten Schutzfeldern gemäß den Fig. 12a bis Fig. 12d wieder reduziert sein.

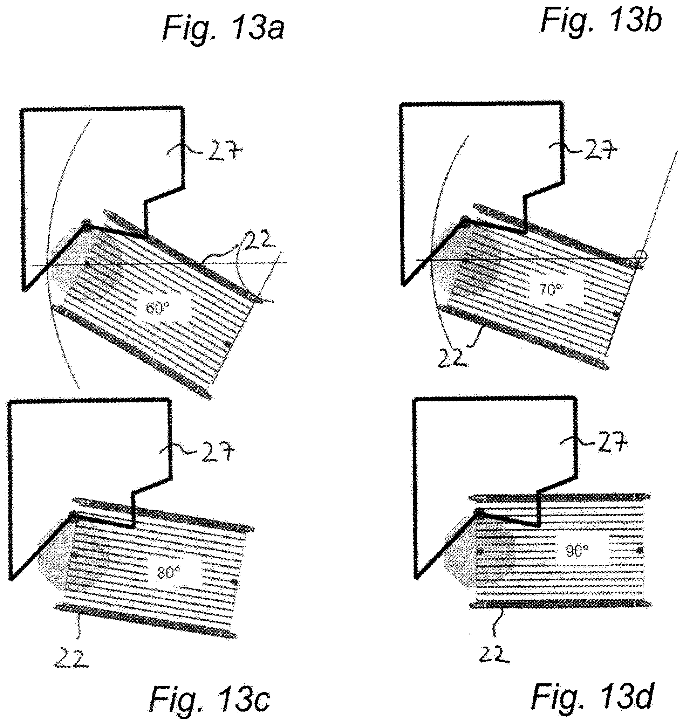

Die Fig. 13a zeigt ein Schutzfeld 27 bei einer Winkelstellung zwischen dem Anhänger 5 und dem autonomen Fahrzeug 1 von 60 Grad. Gegenüber dem Schutzfeld 27 gemäß Fig. 12d ist das Schutzfeld 27 um den erweiterten Flächenanteil in Abbiegerichtung, d.h. gemäß dem Beispiel der dargestellten Abbiegerichtung nach rechts, zumindest teilweise wieder reduziert. Gleichzeitig kann das Schutzfeld in Fahrtrichtung des autonomen Fahrzeugs 1 auch wieder erweitert sein.

Die Fig. 13b zeigt ein Schutzfeld 27 bei einer Winkelstellung zwischen dem Anhänger 5 und dem autonomen Fahrzeug 1 von 70 Grad. Gegenüber dem Schutzfeld 27 gemäß Fig. 12d ist das Schutzfeld 27 um den erweiterten Flächenanteil in Abbiegerichtung, d.h. gemäß dem Beispiel der dargestellten Abbiegerichtung nach rechts, zumindest teilweise wieder reduziert. Gleichzeitig kann das Schutzfeld in Fahrtrichtung des autonomen Fahrzeugs 1 auch wieder erweitert sein.

Die Fig. 13c zeigt ein Schutzfeld 27 bei einer Winkelstellung zwischen dem Anhänger 5 und dem autonomen Fahrzeug 1 von 80 Grad. Gegenüber dem Schutzfeld 27 gemäß Fig. 12d ist das Schutzfeld 27 um den erweiterten Flächenanteil in Abbiegerichtung, d.h. gemäß dem Beispiel der dargestellten Abbiegerichtung nach rechts, zumindest teilweise wieder reduziert. Gleichzeitig kann das Schutzfeld in Fahrtrichtung des autonomen Fahrzeugs 1 auch wieder erweitert sein.

Die Fig. 13d zeigt ein Schutzfeld 27 bei einer Winkelstellung zwischen dem Anhänger 5 und dem autonomen Fahrzeug 1 von 90 Grad. Gegenüber dem Schutzfeld 27 gemäß Fig. 12d ist das Schutzfeld 27 um den erweiterten Flächenanteil in Abbiegerichtung, d.h. gemäß dem Beispiel der dargestellten Abbiegerichtung nach rechts, zumindest teilweise wieder reduziert. Gleichzeitig kann das Schutzfeld in Fahrtrichtung des autonomen Fahrzeugs 1 auch wieder erweitert sein.

Die Formen der Schutzfelder 27 gemäß den Figuren 12a bis 13d für eine Abbiegerichtung nach rechts, können entsprechend gespiegelt auch bei nicht dargestellten Fahrten mit Abbiegerichtung nach links analog zur Anwendung kommen.

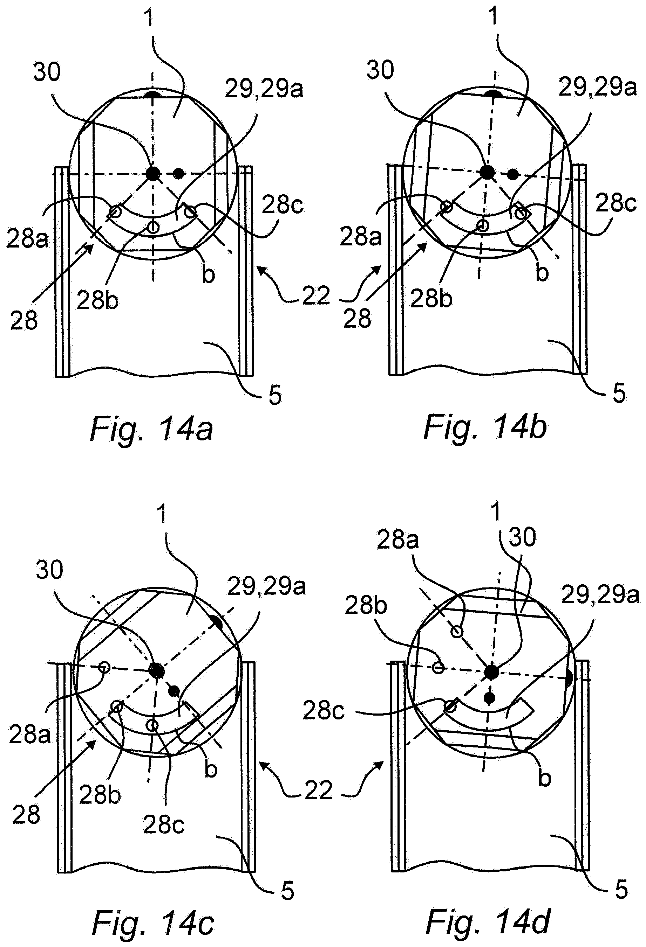

In den Fig. 14a bis Fig. 14d ist eine beispielhafte Ausführungsform einer Sensoranordnung 28 gezeigt, die drei Näherungsschalter 28a, 28b, 28c aufweist, die in gleichen Abständen voneinander auf einem zum Drehpunkt 30 des autonomen Fahrzeugs 1 selben Radius angeordnet sind. Der Anhänger 5 weist als Markeranordnung 29 einen in Richtung der Näherungsschalter 28a, 28b, 28c vorspringenden Kreisbogenabschnitt, insbesondere kreisbogenabschnittsförmigen Blechvorsprung 29a auf, der eine zusammen mit den Näherungsschaltern 28a, 28b, 28c die Fahrrichtungswinkelbereiche definierende Bogenlänge b aufweist.

So kann beispielsweise, wie in Fig. 14a gezeigt, ein erster Fahrrichtungswinkelbereich von minus 5 Grad bis plus fünf Grad definiert sein, der im Wesentlichen einer Geradeausfahrt des autonomen Transportsystems 22 entspricht. Ein zweiter Fahrrichtungswinkelbereich, wie in Fig. 14b gezeigt, kann von plus 6 Grad bis plus 50 Grad definiert sein, der im Wesentlichen einer weiten Kurvenfahrt des autonomen Transportsystems 22 entspricht. Ein dritter Fahrrichtungswinkelbereich kann, wie in Fig. 14c gezeigt, von plus 51 Grad bis plus 95 Grad definiert sein, der im Wesentlichen einer engen Kurvenfahrt des autonomen Transportsystems 22 entspricht. Zusätzlich kann, wie in Fig. 14d gezeigt, ein vierter Fahrrichtungswinkelbereich beispielsweise von plus 95 Grad bis plus 180 Grad definiert sein, der im Wesentlichen einem Rückrangieren des autonomen Transportsystems 22 entspricht.

Unter Vorgabe dieser Fahrrichtungswinkelbereich können die drei Näherungsschalter 28a, 28b, 28c am autonomen Fahrzeug 1 angebracht sein, die bezüglich eines Drehpunkts 30 des autonomen Fahrzeugs 1 auf demselben Kreisbogenabschnitt, d.h. auf demselben Radius in Abständen von 45 Winkelgrad voneinander entfernt angeordnet sind. Die Markeranordnung 29, insbesondere der kreisbogenabschnittsförmige Blechvorsprung 29a, kann sich dabei über einen Winkel von ca. 90 Grad am Anhänger 5 um den Drehpunkt 30 erstrecken.

So können in dem ersten Fahrrichtungswinkelbereich alle drei Näherungsschalter 28a, 28b, 28c innerhalb des Bogenabschnitts der Markeranordnung 29 liegen, wobei alle drei Näherungsschalter 28a, 28b, 28c ein Signal liefern. Im zweiten Fahrrichtungswinkelbereich kommt einer der drei Näherungsschalter 28a, 28b, 28c aus dem Bogenabschnitt der Markeranordnung 29 heraus, so dass nur die beiden verbleibenden Näherungsschalter 28a, 28b, 28c ein Signal liefern und der eine Näherungsschalter 28a, 28b, 28c kein Signal liefert. Im dritten Fahrrichtungswinkelbereich kommen zwei der drei Näherungsschalter 28a, 28b, 28c aus dem Bogenabschnitt der Markeranordnung 29 heraus, so dass nur ein verbleibender Näherungsschalter 28a, 28b, 28c ein Signal liefert und die beiden anderen Näherungsschalter 28a, 28b, 28c kein Signal liefern. Im vierten Fahrrichtungswinkelbereich kommen alle drei Näherungsschalter 28a, 28b, 28c aus dem Bogenabschnitt der Markeranordnung 29 heraus, so dass keiner der drei Näherungsschalter 28a, 28b, 28c ein Signal liefern.

## Patentansprüche

1. Autonomes Transportsystem aufweisend ein autonomes Fahrzeug (1), aufweisend einen Fahrzeugkörper (2), ein Fahrwerk (3) mit wenigstens einem angetriebenen Rad (3a), eine Kupplung (4) zum Ankuppeln eines Anhängers (5) an das autonome Fahrzeug (1), und mindestens einen berührungslos detektierenden Abstandssensor (6), der eingerichtet ist, Signale (7) in wenigstens eine Senderichtung (S) auszusenden und der am autonomen Fahrzeug (1) derart angeordnet ist, die Signale (7) in einer Höhe (h) auszusenden, die unter einer maximalen Erhebung (H) des Fahrzeugkörpers (2) liegt, und deren Senderichtung (S) eine Richtungskomponente (R) aufweist, die in einer Draufsicht auf das autonome Fahrzeug (1) den Grundriss des Fahrzeugkörpers (2) schneidet und einen Anhänger (5),aufweisend eine Gegenkupplung (14) zum Ankuppeln an die Kupplung (4) des autonomen Fahrzeugs (1), einen Tragboden (15), vier antriebslose Räder (16a, 16b, 16c, 16d), die jeweils an einer Radlagerung (17a, 17b, 17c, 17d) um eine Drehachse drehbar gelagert sind, und ein die Radlagerungen (17a, 17b, 17c, 17d) mit dem Tragboden (15) verbindendes Anhängerfahrwerk (13), **dadurch gekennzeichnet, dass** das Anhängerfahrwerk (13) ausgebildet ist, zwischen den Rädern (16a, 16b, 16c, 16d) und dem Tragboden (15) einen optisch durchlässigen Spaltraum (18) für Signale (7) des berührungslos detektierenden Abstandssensors (6) des autonomen Fahrzeugs (1) zu bilden, und dass der berührungslos detektierende Abstandssensor (6) an einer in Fahrtrichtung (F) des autonomen Fahrzeugs (1) vorderen Seite (8) des Fahrzeugkörpers (2) angeordnet ist und die Senderichtung (S) eine entgegen der Fahrtrichtung (F) weisende Richtungskomponente (R) aufweist.

2. Autonomes Transportsystem nach Anspruch 1, **dadurch gekennzeichnet, dass** der berührungslos detektierende Abstandssensor (6) eingerichtet ist, Signale (7) in Senderichtungen (S) auszusenden, die in einem Sektor (K) liegen, der sich ausgehend von der Fahrtrichtung (F) des autonomen Fahrzeugs (1) über einen Winkelbereich von minus 135 Grad bis plus 135 Grad erstreckt.

3. Autonomes Transportsystem nach Anspruch 1 oder 2, **dadurch gekennzeichnet, dass** der Fahrzeugkörper (2) ein Gehäuse (2a) mit einer Grundform aufweist, von der Abschnitte (9a, 9b), die in der Senderichtung (S) des berührungslos detektierenden Abstandssensors (6) liegen, ausgespart sind.

4. Autonomes Transportsystem nach einem der Ansprüche 1 bis 3, **dadurch gekennzeichnet, dass** das Fahrwerk (3) ausgebildet ist, das autonome Fahrzeug (1) im Stand um eine senkrechte Symmetrieachse der Kupplung (4) zu drehen.

5. Autonomes Transportsystem nach einem der Ansprüche 1 bis 4, **dadurch gekennzeichnet, dass** die Drehachsen der Räder (16a, 16b, 16c, 16d) und/oder der Radlagerungen (17a, 17b, 17c, 17d) des Anhängers (5) parallel zu einer rechtwinkelig zur Fahrtrichtung (F) des Anhängerfahrwerks (13) verlaufenden geraden Vorderkante (V) und/oder geraden Hinterkante (HK) des Tragbodens (15) des Anhängers (5), insbesondere eines eine rechteckige Umfangskontur aufweisenden Tragbodens (15), ausgerichtet sind und die Drehachsen direkt unter der Vorderkante (V) und/oder Hinterkante (HK) angeordnet sind oder außerhalb einer Umfangskontur des Tragbodens (15) angeordnet sind.

6. Autonomes Transportsystem nach einem der Ansprüche 1 bis 5, aufweisend eine Messvorrichtung (23), die eingerichtet ist, einen sich durch eine erste Orientierung des autonomen Fahrzeugs (1) und eine zweite Orientierung des Anhängers (5) einstellenden Lenkwinkel durch Messen der Lagen von Kupplung (4) und Gegenkupplung (14) zu bestimmen.

7. Autonomes Transportsystem nach einem der Ansprüche 1 bis 6, aufweisend eine Steuerungsvorrichtung, die eingerichtet ist, einen sich durch eine erste Orientierung des autonomen Fahrzeugs (1) und eine zweite Orientierung des Anhängers (5) einstellenden Lenkwinkel durch Detektieren der Position einer Komponente des Anhängers (5), insbesondere des Tragbodens (15), des Anhängerfahrwerks (13), der Räder (16a, 16b, 16c, 16d), der Radlagerungen (17a, 17b, 17c, 17d) und/oder von wenigstens einer an den Anhänger (5) angebrachten Reflektormarke (26a, 26b), bezüglich des autonomen Fahrzeugs (1) mittels des berührungslos detektierenden Abstandssensors (6) des autonomen Fahrzeugs (1) oder mittels eines weiteren Sensors, insbesondere eines weiteren berührungslos detektierenden Abstandssensors (6) zu bestimmen.

8. Autonomes Transportsystem nach einem der Ansprüche 1 bis 7, aufweisend eine Steuerungsvorrichtung, die eingerichtet ist, während eines die Umgebung mittels des berührungslos detektierenden Abstandssensors (6) nach Hindernissen überwachenden Navigationsbetriebs, die Komponenten des Anhängers (5), insbesondere den Tragboden (15), das Anhängerfahrwerk (13), die Räder (16a, 16b, 16c, 16d) und/oder die Radlagerungen (17a, 17b, 17c, 17d), mittels des berührungslos detektierenden Abstandssensors (6) zu erkennen und bei der Überwachung nach Hindernissen herauszufiltern.

9. Autonomes Transportsystem nach einem der Ansprüche 1 bis 8, **dadurch gekennzeichnet, dass** der Anhänger (5) wenigstens eine, insbesondere vier, vorzugsweise im Bereich von vier Ecken eines in der Draufsicht rechteckigen oder quadratischen Anhängers (5), als Markierungskörper ausgebildete Reflektormarke (26a, 26b), aufweist, wobei der Markierungskörper ausgebildet ist, von dem berührungslos detektierenden Abstandssensor (6) des autonomen Fahrzeugs (1) erkannt und von der Steuerungsvorrichtung ausgewertet zu werden, derart, dass Kollisionen zwischen dem Anhänger (5) und dem autonomen Fahrzeug (1) verhindert werden.

10. Autonomes Transportsystem nach Anspruch 9, **dadurch gekennzeichnet, dass** der wenigstens eine Markierungskörper aus einem Sichtfeld des berührungslos detektierenden Abstandssensors (6) automatisch herausbewegbar, insbesondere herausschwenkbar an dem Anhänger (5) gelagert ist.

11. Autonomes Transportsystem nach einem der Ansprüche 1 bis 10, **dadurch gekennzeichnet, dass** das autonome Fahrzeug (1) eine Steuerungsvorrichtung aufweist, die ausgebildet ist, in Abhängigkeit einer Winkelstellung zwischen dem Anhänger (5) und dem autonomen Fahrzeug (1) unterschiedliche Schutzfelder vorzugeben, die durch den berührungslos detektierenden Abstandssensor (6) auf Eindringen von Objekten überwacht werden.

12. Autonomes Transportsystem nach einem der Ansprüche 1 bis 11, **gekennzeichnet durch** eine im Anhänger (5) vorgesehenen Vorrichtung, insbesondere eine Mechanik, die bei einem Ankuppelvorgang ein Bewegen, insbesondere ein Einklappen, ein Einschwenken oder ein Einfahren der Markierungskörper, auf der Seite an der sich das autonome Fahrzeug (1) ankoppelt, auslöst.

## Claims

1. Autonomous transport system comprising an autonomous vehicle (1), having a vehicle body (2), a chassis (3) with at least one driven wheel (3a), a coupling (4) for coupling a trailer (5) to the autonomous vehicle (1), and at least one contactless detecting distance sensor (6), which is configured to output signals (7) in at least one output direction (5) and which is arranged on the autonomous vehicle (1) to output the signals (7) at a level (h) which is below a maximum elevation (H) of the vehicle body (2), and of which the output direction (S) has a direction component (R) which in a plan view of the autonomous vehicle (1) intersects the ground plan of the vehicle body (2) and a trailer (5) having a mating coupling (14) for coupling to the coupling (4) of the autonomous vehicle (1), a support base (15), four driveless wheels (16a, 16b, 16c, 16d) which are mounted rotatably on a wheel bearing (17a, 17b, 17c, 17d) respectively about an axis of rotation and a trailer chassis (13) connecting the wheel bearings (17a, 17b, 17c, 17d) to the support base (15), **characterised in that** the trailer chassis (13) is designed to form between the wheels (16a, 16, 16c, 16d) and the support base (15) an optically permeable gap area (18) for signals (7) of the contactless detecting distance sensor (6) of the autonomous vehicle (1) and **in that** the contactless detecting distances sensor (6) is arranged on a front side (8) of the vehicle body (2) in travelling direction (F) of the autonomous vehicle (1) and the output direction (S) has a direction component (R) directed opposite the travelling direction (F).

2. Autonomous vehicle according to claim 1, **characterised in that** the contactless detecting distance sensor (6) is configured to output signals (7) in output directions (S) which lie in a sector (K) which extends from the travelling direction (F) of the autonomous vehicle (1) over an angular range of minus 135 degrees to plus 135 degrees.

3. Autonomous vehicle according to claim 1 or 2, **characterised in that** the vehicle body (2) has a housing (2a) with a basic form, from which sections (9a, 9b) have been removed which are in the output direction (S) of the contactless detecting distance sensor (6).

4. Autonomous vehicle according to any of claims 1 to 3, **characterised in that** the chassis (3) is designed to rotate the autonomous vehicle (1) when stationary about a perpendicular axis of symmetry of the coupling (4).

5. Autonomous transport system according to any of claims 1 to 4, **characterised in that** the axes of rotation of the wheels (16a, 16b, 16c, 16d) and/or the wheel bearings (17a, 17b, 17c, 17d) of the trailer (5) are aligned parallel to a straight front edge (V) running perpendicular to the travelling direction (F) of the trailer chassis (13) and/or a straight rear edge (HK) of the support base (15) of the trailer (5), in particular a support base (15) having a rectangular peripheral contour, and the axes of rotation are arranged directly underneath the front edge (V) and/or rear edge (HK) or are arranged outside a peripheral contour of the support base (15).

6. Autonomous transport system according to any of claims 1 to 5, having a measuring device (23), which is configured to determine a steering angle set by a first orientation of the autonomous vehicle (1) and a second orientation of the trailer (5) by measuring the positions of the coupling (4) and mating coupling (14).

7. Autonomous transport system according to any of claims 1 to 6, having a control device which is configured to determine a steering angle set by a first orientation of the autonomous vehicle (1) and a second orientation of the trailer (5) by detecting the position of a component of the trailer (5), in particular the support base (15), of the trailer chassis (13), the wheels (16a, 16b, 16c, 16d), the wheel bearings (17a, 17b, 17c, 17d) and/or of at least one reflector mark (26a, 26b) attached to the trailer (5), relative to the autonomous vehicle (1) by means of the contactless detecting distance sensor (6) of the autonomous vehicle (1) or by means of an additional sensor, in particular a further contactless detecting distance sensor (6).

8. Autonomous Transport system according to any of claims 1 to 7, having a control device which is configured during a navigation operation monitoring the environment by means of the contactless detecting distance sensor (6) for obstacles, to recognise the components of the trailer (5), in particular the support base (15), the trailer chassis (13), the wheels (16a, 16b, 16c, 16d) and/or the wheel bearings (17a, 17b, 17c, 17d), by means of the contactless detecting distance sensor (6) and filter them out while monitoring for obstacles.

9. Autonomous transport system according to any of claims 1 to 8, **characterised in that** the trailer (5) has at least one, in particular four, reflector marks (26a, 26b), designed as marking bodies, preferably in the region of four corners of a trailer (5), which is rectangular or quadratic in plan view, wherein the marking body is designed to be recognised by the contactless detecting distance sensor (6) of the autonomous vehicle (1) and to be evaluated by the control device such that collisions are prevented between the trailer (5) and the autonomous vehicle (1).

10. Autonomous transport system according to claim 9, **characterised in that** the at least one marking body is mounted on the trailer (5) so as to be moved automatically, in particular pivoted, out of a field of vision of the contactless detecting distance sensor (6).

11. Autonomous transport system according to any of claims 1 to 10, **characterised in that** the autonomous vehicle (1) has a control device which is designed, as a function of an angular position between the trailer (5) and the autonomous vehicle (1), to define different protective fields which are monitored by the contactless detecting distance sensor (6) for the intrusion of objects.

12. Autonomous transport system according to any of claims 1 to 11, **characterised by** a device provided in the trailer (5), in particular a mechanism, which during a coupling process triggers a movement, in particular folding, pivoting or retraction of the marking bodies on the side to which the autonomous vehicle (1) is coupled.

## Revendications

1. Système de transport autonome présentant un véhicule autonome (1), comprenant une carrosserie de véhicule (2), un châssis (3) avec au moins une roue motrice (3a), un attelage (4) pour l'accouplement d'une remorque (5) au véhicule autonome (1), et au moins un capteur de distance (6) à détection sans contact, qui est configuré pour transmettre des signaux (7) dans au moins une direction d'émission (S) et qui est agencé sur le véhicule autonome (1) de telle sorte qu'il émet les signaux (7) à une hauteur (h) qui est inférieure à une élévation maximale (H) de la carrosserie de véhicule (2), et dont la direction d'émission (S) présente une composante directionnelle (R), qui, dans une vue en plan sur le véhicule autonome (1), croise le plan de la carrosserie de véhicule (2), et une remorque (5) comprenant un contre-attelage (14) pour l'accouplement à l'attelage (4) du véhicule autonome (1), un plancher porteur (15), quatre roues non motrices (16a, 16b, 16c, 16d), qui sont chacune montées sur un palier de roue (17a, 17b, 17c, 17d) de manière à pouvoir tourner autour d'un axe de rotation, et un châssis de remorque (13) reliant les paliers de roue (17a, 17b, 17c, 17d) au plancher porteur (15), **caractérisé en ce que** le châssis de remorque (13) est conçu pour former un interstice (18) optiquement transparent pour des signaux (7) du capteur de distance (6) à détection sans contact du véhicule autonome (1), et **en ce que** le capteur de distance (6) à détection sans contact est agencé sur une face avant (8) de la carrosserie de véhicule (2) dans le sens de la marche (F) du véhicule autonome (1) et **en ce que** la direction d'émission (S) présente une composante directionnelle (R) orientée à l'opposé du sens de la marche (F).

2. Système de transport autonome selon la revendication 1, **caractérisé en ce que** le capteur de distance (6) à détection sans contact est cofiguré pour émettre des signaux (7) dans des directions d'émission (S) qui se trouvent dans un secteur (K) qui, en partant du sens de la marche (F) du véhicule autonome (1), s'étend sur une plage angulaire de moins 135 degrés à plus 135 degrés.

3. Système de transport autonome selon la revendication 1 ou 2, **caractérisé en ce que** la carrosserie de véhicule (2) présente un boîtier (2a) avec une forme de base de laquelle sont évidées des parties (9a, 9b) situées dans la direction d'émission (S) du capteur de distance (6) à détection sans contact.

4. Système de transport autonome selon l'une quelconque des revendications 1 à 3, **caractérisé en ce que** le châssis (3) est réalisé pour faire tourner le véhicule autonome (1), lorsqu'il est à l'arrêt, autour d'un axe vertical de symétrie de l'attelage (4).

5. Système de transport autonome selon l'une quelconque des revendications 1 à 4, **caractérisé en ce que** les axes de rotation des roues (16a, 16b, 16c, 16d) et/ou des paliers de roue (17a, 17b, 17c, 17d) de la remorque (5) sont orientés parallèlement à un bord avant droit (V) et/ou à un bord arrière droit (HK) du plancher porteur (15) de la remorque (5), s'étendant perpendiculairement au sens de la marche (F) du châssis de la remorque (13), en particulier d'un plancher porteur (15) présentant un contour périphérique rectangulaire, et les axes de rotation sont agencés directement sous le bord avant (V) et/ou le bord arrière (HK) ou sont agencés à l'extérieur d'un contour périphérique du plancher porteur (15).

6. Système de transport autonome selon l'une quelconque des revendications 1 à 5, présentant un dispositif de mesure (23) qui est configuré pour déterminer un angle de braquage qui s'établit par une première orientation du véhicule autonome (1) et par une deuxième orientation de la remorque (5), en mesurant les positions de l'attelage (4) et du contre-attelage (14).

7. Système de transport autonome selon l'une quelconque des revendications 1 à 6, présentant un dispositif de commande qui est configuré pour déterminer un angle de braquage qui s'établit par une première orientation du véhicule autonome (1) et une deuxième orientation de la remorque (5), en détectant la position d'un composant de la remorque (5), en particulier du plancher porteur (15), du châssis (13) de la remorque, des roues (16a, 16b, 16c, 16d), des paliers de roue (17a, 17b, 17c, 17d), et/ou au moins une marque réflectrice (26a, 26b) montée sur la remorque (5), par rapport au véhicule autonome (1) au moyen du capteur de distance (6) à détection sans contact du véhicule autonome (1) ou au moyen d'un autre capteur, en particulier d'un autre capteur de distance (6) à détection sans contact.

8. Système de transport autonome selon l'une des revendications 1 à 7, comprenant un dispositif de commande qui est configuré pour déceler, pendant une opération de navigation surveillant l'environnement à la recherche d'obstacles au moyen du capteur de distance à détection sans contact (6), les composants de la remorque (5), en particulier le plancher porteur (15), le châssis (13) de la remorque, les roues (16a, 16b, 16c, 16d) et/ou les paliers de roue (17a, 17b, 17c, 17d), au moyen du capteur de distance à détection sans contact (6), et pour filtrer lesdits composants lors de la surveillance à la recherche d'obstacles.

9. Système de transport autonome selon l'une des revendications 1 à 8, **caractérisé en ce que** la remorque (5) présente au moins un, en particulier quatre, de préférence dans la zone des quatre coins d'une remorque (5) qui est rectangulaire ou carrée dans une vue en plan, une marque réflectrice (26a, 26b) réalisée sous forme de corps de marquage, le corps de marquage étant réalisé pour être décelé par le capteur de distance (6) à détection sans contact du véhicule autonome (1) et pour être évalué par le dispositif de commande de telle sorte que des collisions entre la remorque (5) et le véhicule autonome (1) sont empêchées.

10. Système de transport autonome selon la revendication 9, **caractérisé en ce que** ledit au moins un corps de marquage peut être automatiquement déplacé hors d'un champ visuel du capteur de distance (6) à détection sans contact, en particulier monté sur la remorque (5) de manière à pouvoir être pivoté vers l'extérieur.

11. Système de transport autonome selon l'une des revendications 1 à 10, **caractérisé en ce que** le véhicule autonome (1) présente un dispositif de commande qui est réalisé pour définir différents champs de protection en fonction d'une position angulaire entre la remorque (5) et le véhicule autonome (1), lesquels champs de protection sont surveillés par le capteur de distance (6) à détection sans contact à la recherche d'une pénétration d'objets.

12. Système de transport autonome selon l'une des revendications 1 à 11, **caractérisé par** un dispositif prévu dans la remorque (5), en particulier un mécanisme qui, lors d'une opération d'attelage, déclenche un mouvement, en particulier un repliage, un pivotement ou une rétraction des corps de marquage, sur le côté sur lequel le véhicule autonome (1) est accouplé.
